# EUROPÄISCHE PATENTSCHRIFT

(11) **EP 1 910 780 B1**
(45) Veröffentlichungstag und Bekanntmachung des Hinweises auf die Patenterteilung: **17.06.2009**
(21) Anmeldenummer: 06792632.9
(22) Anmeldetag: 01.08.2006
(51) Int. Cl.: G01D 5/244, G01D 5/16, G01P 3/489, G01P 3/487

(54) **ANORDNUNG ZUR RADDREHZAHLERFASSUNG MIT ERHÖHTER EIGENSICHERHEIT**
DEVICE FOR RECORDING THE SPEED OF ROTATION OF A WHEEL WITH AN INCREASED INTRINSIC SAFETY
DISPOSITIF POUR DETERMINER LA VITESSE DE ROTATION D'UNE ROUE AVEC UNE SECURITE INTRINSEQUE ELEVEE

(30) Priorität: 01.08.2005 DE 102005036614; 01.08.2006 DE 102006036197
(43) Veröffentlichungstag der Anmeldung: 16.04.2008
(73) Patentinhaber: Continental Teves AG & Co. oHG, 60488 Frankfurt am Main (DE)
(72) Erfinder: LOHBERG, Peter, 61381 Friedrichsdorf (DE); FRITZ, Wolfgang, 35440 Linden (DE)
(86) Internationale Anmeldenummer: PCT/EP2006/064891
(87) Internationale Veröffentlichungsnummer: WO 2007/014947

(56) Entgegenhaltungen:
- WO-A-01/51893
- WO-A-20/04003478
- DE-A1- 19 618 509

## Beschreibung

Die Erfindung betrifft ein Verfahren zur Erhöhung der Eigensicherheit einer Anordnung zur Drehzahlerfassung und/oder zur eigensicheren Erfassung von linearen und/oder rotatorischen Bewegungen eines Körpers, insbesondere eines Rades, gemäß Oberbegriff von Anspruch 1, eine Anordnung zur eigensicheren Drehzahlerfassung und/oder zur eigensicheren Erfassung von linearen und/oder rotatorischen Bewegungen eines Körpers, insbesondere eines Rades, gemäß Oberbegriff von Anspruch 2 die Verwendung des Verfahrens und/oder der Anordnung in Kraftfahrzeugen.

Es ist bekannt die Drehzahl eines Rades mit einer Sensoranordnung zu erfassen, welche einen magnetischen Encoder, der mit dem Rad, rotiert, und mindestens einen magnetfeldempfindlichen Sensor aufweist, wobei der magnetische Encoder über einen magnetischen Luftspalt mit dem magnetfeldempfindlichen Sensor magnetisch gekoppelt ist.

Sensoren, insbesondere aktive Sensoren, auf Basis magnetoresistiver Effekte werden wegen ihrer Robustheit und guten Signalqualität in der Industrie und besonders häufig in der Kraftfahrzeug-Industrie eingesetzt. Diese guten Signaleigenschaften werden außerdem beispielsweise dadurch gewährleistet, dass bei Einbau beziehungsweise bei der Montage des Sensors die Toleranzen einer spezifizierten Relativposition zwischen Encoderspur und Sensor, insbesondere dessen Sensorelement/en, eingehalten werden. Werden beispielsweise diese Toleranzen durch seitlichen Relativversatz und zu starke Annäherung (zu geringe Luftspaltlänge bzw. zu starke Querkomponenten der Encoderfeldstärke) nicht eingehalten, können Signalstörungen auftreten, die das Sensorausgangssignal zeitweise oder dauerhaft in unzulässiger Weise verändern. Der Verlauf des Ausgangssignals korrespondiert dann nicht mehr präzise mit dem Bewegungsverlauf der Polpaare der Encoderspur, sondern es kommt typischerweise zu sporadischen oder dauerhaften Frequenzvervielfachungen und/oder Frequenzschwankugen, insbesondere Frequenzverdopplungen, die beispielsweise auch bei den Raddrehzahlsensoren von Kraftfahrzeugen auftreten können. Um solche störenden Frequenzverdopplungen oder Frequenzvervielfachungen zu vermeiden werden geeignete Endabnahmeprüfungen durchgeführt. Um im Betrieb auf solche Phänomene angemessen reagieren zu können, werden üblicherweise aufwändige Plausibilitätsrechnungen durchgeführt. Diese Fehler können sich auch im Verlauf der weiteren Signalverarbeitung bemerkbar machen und sogar verstärken.

Druckschrift DE 199 06 937 A1 schlägt einen Drehzahlgeber vor, wobei die Winkelteilung des Encoders gröber ist als die Winkelauflösung des Drehzahlgebers und der Drehzahlgeber zwei voneinander getrennt angeordnete Magnetfeldsensoren aufweist, welche zwei gegeneinander phasenversetzte Messsignale erzeugen, die so verknüpft werden, dass das Ausgangssignal eine gegenüber den Messsignalen zur Erreichung der notwendigen Messauflösung erhöhte Frequenz aufweist. Solch ein Drehzahlgeber dient hauptsächlich einer Verbesserung der Auflösung, es wird aber keine Verbesserung hinsichtlich der Eigensicherheit dieses Drehzahlgebers erreicht.

Die Schrift WO 2004/003478 A vermeidet die Gefahr der Kennlinienumkehr (des "Flippens") durch Verwendung eines Sensors mit einer quadratischen Kennlinie statt einer linearisierten Kennlinie. Die Schrift WO 01/51893 A erwähnt die Funktionsüberwachung durch ein redundantes Sensorelement und benutzt Sensoren mit einfacher und verdoppelter Signalfrequenz.

Die Überwachung des Signals einfacher Frequenz durch Vergleich mit dem Signal doppelter Frequenz findet in dieser Schrift nicht statt.

Die Aufgabe der vorliegenden Erfindung besteht darin, ein Verfahren zur Erhöhung der Eigensicherheit einer Anordnung zur Drehzahlerfassung und/oder zur eigensicheren Erfassung von linearen und/oder rotatorischen Bewegungen eines Körpers, insbesondere eines Rades, und eine entsprechende Anordnung vorzuschlagen.

Die Aufgabe wird erfindungsgemäß gelöst durch das Verfahren gemäß Anspruch 1 und die Anordnung gemäß Anspruch 2.

Der Erfindung liegt der Gedanke zu Grunde die Eigensicherheit einer Anordnung zur Raddrehzahlerfassung und/oder einer Anordnung zur Erfassung von Bewegungen eines Rades oder eines anderen, insbesondere rotierenden, Körpers zu erhöhen. Dabei weist die erfindungsgemäße Anordnung einen magnetischen Encoder und einen Sensor auf, welcher mindestens zwei Sensorelemente aufweist, wobei der magnetische Encoder sich mit dem Körper, insbesondere mit dem Rad, bewegt und/oder rotiert und über einen magnetischen Luftspalt mit den mindestens zwei Sensorelementen des Sensors magnetisch gekoppelt ist. Außerdem weist der Sensor mindestens zwei, insbesonders voneinander getrennte, Signalpfade auf, die jeweils mindestens eines der Sensorelemente und jeweils eine Signalaufbereitungsstufe umfassen. Dabei ist mindestens ein primär messender Signalpfad vorhanden und so aufgebaut, dass sein mindestens eines Ausgangssignal, insbesondere der/die zeitlichen Verlauf/Verläufe seines mindestens einen Ausgangssignals, im Normalbetrieb die einfache Frequenz der durch das mindestens eine Sensorelement erfassten Bewegung der Polpaare des Encoders wiedergibt und/oder dass der/die zeitliche/n Verlauf/Verläufe seines mindestens einen Ausgangssignals im Normalbetrieb Muster aufweist/aufweisen, wobei das zeitliche Auftreten dieser Muster im Wesentlichen der einfachen Relativgeschwindigkeit zwischen dem Sensor und den durch diesen erfassten Polpaaren des Encoders entspricht und/oder dass seine ein oder mehreren Ausgangssignale insbesondere ein Maß für die einfache Raddrehzahl darstellen, und dabei ist zusätzlich mindestens ein beobachtender Signalpfad vorhanden und so aufgebaut, dass sein mindestens eines Ausgangssignal, insbesondere der/die zeitliche/n Verlauf/Verläufe seines mindestens einen Ausgangssignals, die doppelte Frequenz der durch das mindestens eine Sensorelement erfassten Bewegung der Polpaare des Encoders wiedergibt und/oder dass der/die zeitliche/n Verlauf/Verläufe seines mindestens einen Ausgangssignals im Normalbetrieb Muster aufweist/aufweisen, wobei das zeitliche Auftreten dieser Muster im Wesentlichen der doppelten Relativgeschwindigkeit zwischen dem Sensor und den durch diesen erfassten Polpaaren des Encoders entspricht und/oder dass seine ein oder mehreren Ausgangssignale insbesondere ein Maß für die doppelte Raddrehzahl darstellen. Die erfindungsgemäße Anordnung ist insbesondere dazu geeignet Störungen, welche einen Normalbetrieb beeinträchtigen zu erkennen und auf diese besonders bevorzugt zu reagieren. Unter diese Störungen beziehungsweise Störeffekte fallen ganz besonders bevorzugt Frequenzvervielfachungen und insbesonders frequenzverdoppelnde Effekte und/oder vorzugsweise Effekte, welche im weiteren Verlauf als "Flippen" beschrieben werden.

Die erfindungsgemäße Anordnung ist bevorzugt zur Durchführung des Verfahrens gemäß Anspruchs 1 vorgesehen.

Erfindungsgemäß werden magnetfeldempfindliche, insbesondere aktive, magnetoresistive Sensoren verwendet. Aktive Sensoren sind, insbesondere für den Kfz-Bereich, bekannt. Es gibt sie in 2-Draht-Ausführung und in 3-Draht-Ausführung. Beispielhaft erfolgen die Beschreibungen von Ausführungsformen anhand der 2-Draht-Ausführung, wie sie für Bremssysteme üblich ist. Es ist jedoch im Sinn der Erfindung, den Grundgedanken auch auf 3-Draht-Ausführungen anzuwenden, die z.B. bei Motor- und / oder Getriebeanwendungen verbreitet ist.

Unter einem Sensorelement wird ein magnetfeldempfindliches Sensorelement auf Basis eines der verschiedenen magnetoresistiven Effekte, insbesondere des anisotropen magnetoresistiven Effektes oder des giant magnetoresistiven Effektes, verstanden. Vorzugsweise setzt eine, insbesondere in den Sensor zu dem Sensorelement integrierte, elektronische Schaltung die Widerstandsänderungen, welche sich aus dem sich ändernden, vom Sensor erfassten Magnetfeld ergeben, in zwei unterschiedliche Strompegel um, die als Ausgangssignal selbst oder Teil eines komplexeren Ausgangssignals die Aufeinanderfolge von z.B. Zahnhöhe und Zahnlücke oder Nordpol und Südpol abbilden. Besonders bevorzugt weist die Anordnung zur eigensicheren Drehzahlerfassung mindestens zwei Sensorelemente auf, wobei unterschiedliche Sensorelemente im Rahmen der Anordnung kombiniert werden können. Sensorelemente bestehen vorzugsweise aus mindestens teilweisen Brückenschaltungen dieser magnetoresistiven Streifenleiter.

Unter einem magnetischen Encoder wird ein Maschinenelement verstanden, das einen, insbesondere inkrementalen, magnetisch codierten Winkelmaßstab und/oder Längenmaßstab trägt. Als Encoder können auch ferromagnetische Zahnräder und/oder Zahnstangen oder Lochscheiben und/oder Lochstangen dienen, die in Kombination mit einem Permanentmagneten einen veränderlichen magnetischen Luftspalt erzeugen. Andererseits können es magnetische Encoder sein, die eine Encoderspur mit einem magnetisch encodierten Muster aufweisen, insbesondere kann solch ein Muster eine ganzzahlige Folge permanent magnetisierter Nord/Südpol-Areale sein, die in alternierender Folge eine sich im Wesentlichen gerade erstreckende oder eine zum Kreis geschlossene Encoderspur bilden, welche beispielsweise in eine Radlagerdichtung eingebracht ist. Insbesondere dient der magnetische Encoder als Impulsgeber innerhalb des Drehzahlerfassungssystems und/oder der Anordnung zur Drehzahlerfassung.

Unter der elektronischen Kontrolleinheit (ECU) wird vorzugsweise die elektronische Kontrolleinheit eines Kraftfahrzeugregelungssystems verstanden, insbesondere ein Netzwerk aus Mikrocontrollern, welches gemeinsam, insbesondere verteilt, Programme und Datenkommunikation abarbeitet. Es ist alternativ zweckmäßig, dass die elektronische Kontrolleinheit (ECU) eine, insbesondere einfache, Auswerteeinheit, besonders bevorzugt zur Ansteuerung einer Lampe oder alternativ besonders bevorzugt ein industrielles Mikroprozessorsystem ist und/oder eine elektronische Schaltung zum Steuern und/oder Regeln ist.

Unter einem Normalbetrieb wird der Betrieb mindestens eines Sensorelements verstanden, während dem keine wesentlichen Störgrößen die Erfassung der Bewegung und/oder Rotation des Encoders stören und somit keine wesentlichen Störungen in dem mindestens einen Ausgangssignal des mindestens einen Sensorelements auftreten. Dies bezieht sich insbesondere auf Störungen bezüglich der Frequenz des mindestens einen Ausgangssignals. Der/die zeitliche/n Verlauf/Verläufe des mindestens einen Ausgangssignals des mindestens einen Sensorelements weisen dabei Muster auf, wobei das zeitliche Auftreten dieser Muster in einem solchen, vom Normalbetrieb abweichenden Störbetrieb, einem Vielfachen und/oder einem schwankenden Vielfachen, insbesondere einer Verdopplung, der Relativgeschwindigkeit zwischen dem Sensor und den durch diesen erfassten Polpaaren des Encoders entspricht, wobei dieses Auftreten dieser Muster, welches nicht mit der Relativgeschwindigkeit zwischen Sensor und den durch diesen erfassten Polpaaren korrespondiert, kurzzeitig und/oder sporadisch, und oder ständig in einer mehr oder weniger starken Ausprägung, insbesondere als eine Signalüberlagerung, auftreten kann. Solche störende Effekte werden beispielsweise als Frequenzschwankungen, Frequenzvervielfachungen oder Frequenzverdopplungen bezeichnet. Diese Störungen können auf Effekten beruhen und/oder als solche bezeichnet werden, welche man als "Flippen" bezeichnet. Dabei handelt es sich vorzugsweise einerseits um Störungen die aus der relativen Position zwischen Sensor und Encoder resultieren. So werden Sensorelemente zur Erfassung von Bewegungen häufig derart betrieben, insbesondere in dem primär messenden Signalpfad der erfindungsgemäßen Sensoranordnung, dass im Wesentlichen nur eine Richtungskomponente des magnetischen Encoderfeldes erfasst wird und aus der Änderung dieser einen Richtungskomponente die Bewegungsinformation des Encoders gewonnen wird. Dabei ist das mindestens eine Sensorelement vorzugsweise im Wesentlichen senkrecht, mittig und mit der Messfläche des Sensorelements im Wesentlichen parallel zur Oberfläche der Encoderspur ausgerichtet. Dem gegenüber werden Winkelmessungen häufig so durchgeführt, dass zwei Richtungskomponenten des magnetischen Encoderfeldes erfasst werden, wobei das mindestens eine Sensorelement im Wesentlichen senkrecht zur Oberfläche der Encoderspur ausgerichtet ist. Vergleichbar verhält sich auch ein Sensorelement, welches im Wesentlichen parallel zur Oberfläche der Encoderspur ausgerichtet ist, aber im Wesentlichen seitlich oder diagonal seitlich zur Oberfläche der Encoderspur positioniert ist. Dabei korrespondiert der Verlauf/die Verläufe des mindestens einen Ausgangssignals des mindestens einen Sensorelements mit der doppelten Frequenz der Bewegung des Encoders, was insbesondere im Sinne der Erfindung als störend angesehen wird. Störungen, welche man als "Flippen" bezeichnet ergeben sich in diesem Zusammenhang aus der obig beschriebenen unerwünschten Erfassung von zwei sich mit der Encoderbewegung ändernden Feldkomponenten, wobei diese Erfassung eines sich drehenden Vektor auch anteilig und als Überlagerung geschehen kann, was ab einer bestimmten Ausprägung als Störung angesehen wird. Andererseits ergeben sich Störungen, welche auch als "Flippen" bezeichnet werden, dadurch, dass die Orientierung der inneren Magnetisierung mindestens eines Streifenleiters mindestens eines Sensorelementes sprunghaft und/oder kontinuierlich umschlägt und/oder sich ändert. Vorzugsweise weisen die Streifenleiter magnetoresistiver Sensorelemente eine Richtung der Formanisotropie auf, welche auch die energetisch günstigste und stabilste Richtung der inneren Magnetisierung ist. Bei einem Umschlagen beziehungsweise Invertieren der Orientierung der Komponente der inneren Magnetisierung in Richtung der Formanisotropie wird die Kennlinie des Sensorelementes an der Ordinate gespiegelt, was bezüglich des Ausgangssignals eine insbesondere frequenzverdoppelnde Wirkung hat. Solch ein Umschlagen ("Flippen") der Orientierung der inneren Magnetisierung erfolgt vorzugsweise dann, wenn das durch einen Stütz- beziehungsweise Vorspannmagneten angelegte Magnetfeld durch ein äußeres Magnetfeld kompensiert und/oder umgekehrt wird. Die Komponenten eines Magnetfeldes in Richtung der Formanisotropie (x-Richtung), die solch eine Wirkung haben, sind vorzugsweise Teil eines magnetischen Störfeldes außerhalb der Sensoranordnung. Insbesondere treten diese unterschiedlichen, als "Flippen" bezeichneten Effekte in Kombination auf, wodurch die Ursache der Störung nicht eindeutig zu bestimmen ist. Besonders bevorzugt redet man in jedem Fall dann von einem "Flippen", wenn frequenzverdoppelnde Störungen in den Ausgangssignalen von Sensorelementen auftreten.

Die Ausgangssignale des mindestens einen primär messenden Signalpfades und des mindestens einen beobachtenden Signalpfades werden in einem Vergleicher, insbesondere einem Komparator, besonders bevorzugt einer Frequenz-Komparatorschaltung, verglichen und das Vergleichsergebnis wird an die elektronische Kontrolleinheit (ECU) übertragen.Durch diese Maßnahme können unterschiedliche Signalverläufe beider Signalpfade erkannt werden und das Vorliegen einer wirksam gewordenen Störung erkannt werden. Ganz besonders bevorzugt werden die Aufbereiteten Signal direkt an die ECU übertragen und dort verglichen und der Vergleich ausgewertet.

Vorzugsweise werden, insbesondere zusätzlich, andere Signalparameter wie beispielsweise die Amplitude, des mindestens einen Ausgangssignals des mindestens einen primär messenden Signalpfades und des mindestens einen beobachtenden Signalpfades in einem Vergleicher verglichen und besonders bevorzugt ausgewertet und ganz besonders bevorzugt das mindestens eine Auswerteergebnis an die elektronische Kontrolleinheit ECU übertragen. Dabei werden beispielsweise die Amplituden der beiden Halbbrückensignale des Sensorelements des beobachtenden Signalpfades verglichen, um eine Information bezüglich der relativen Positionierung zwischen dem Lesepunkt der Vollbrücke des Sensorelements und der Mitte der Encoderspur zu erhalten.

Es ist bevorzugt, dass der mindestens eine primär messende Signalpfad derart aufgebaut und/oder angeordnet ist, dass es nicht ausgeschlossen ist, dass sein/e Ausgangssignal/e die doppelte Frequenz wiedergibt/geben und/oder dass der/die zeitliche/n Verlauf/Verläufe seines mindestens einen Ausgangssignals im Normalbetrieb Muster aufweist/aufweisen, wobei das zeitliche Auftreten dieser Muster im Wesentlichen der doppelten Relativgeschwindigkeit zwischen dem Sensor und der durch diesen erfassten Polpaare des Encoders entspricht. Der mindestens eine primär messende Signalpfad kann dadurch so ausgelegt sein, dass er im Normalfall eine hohe Messgenauigkeit bietet.

Der mindestens eine beobachtende Signalpfad ist derart aufgebaut und/oder angeordnet, dass sein/e Ausgangssignal/e unabhängig von den magnetischen Bedingungen im Luftspalt, insbesondere auch unabhängig von der Position des mindestens einen Sensorelementes des mindestens einen beobachtenden Signalpfads relativ zur Encoderspur, die doppelte Frequenz wiedergibt/geben und/oder dass der/die zeitliche/n Verlauf/Verläufe seines mindestens einen Ausgangssignals im Normalbetrieb Muster aufweist/aufweisen, wobei das zeitliche Auftreten dieser Muster unabhängig von den magnetischen Bedingungen im Luftspalt, insbesondere auch unabhängig von der Position des mindestens einen Sensorelementes des mindestens einen beobachtenden Signalpfads relativ zur Encoderspur, im Wesentlichen der doppelten Relativgeschwindigkeit zwischen dem Sensor und den durch diesen erfassten Polpaaren des Encoders entspricht. Der mindestens eine beobachtende Signalpfad gibt durch diese Ausgestaltung zuverlässig ein Signal verdoppelter Frequenz aus, wodurch unerwünschte Frequenzverdopplungen des mindestens einen primär messenden Signalpfades immer erkannt werden können.

Es ist zweckmäßig, dass das mindestens eine Ausgangssignal der mindestens einen Sensorelements, insbesondere des/der Sensorelements/Sensorelemente des mindestens einen primär messenden Signalpfades, neben der Information über die Frequenz, welche insbesondere proportional zur Relativgeschwindigkeit zwischen Sensor und Encoder ist, zusätzliche Informationen, insbesondere über Bewegungsrichtung und/oder Luftspaltmaß, bereitstellen. Diese Zusatzinformationen bieten Möglichkeiten das Einsatzspektrum der Anordnung zu vergrößern, beziehungsweise die Anordnung flexibel an den jeweiligen Einsatz anzupassen und zusätzliche Funktionen besonders bezüglich der Signalübertragung zu integrieren.

Vorzugsweise werden die Ausgangssignale des mindestens einen primär messenden Signalpfades und des mindestens einen beobachtenden Signalpfades ständig und/oder zu definierten Zeitpunkten miteinander in dem Vergleicher verglichen, wobei der Vergleicher insbesondere so ausgelegt ist, dass, wenn die von den Ausgangssignalen des/der primär messenden Signalpfade/s und des/der beobachtenden Signalpfade/s wiedergegebenen Frequenzen, welche insbesondere proportional zur Relativgeschwindigkeit zwischen Sensor und Encoder ist, und/oder der zeitliche Verlauf der die Bewegung des Encoders wiedergebenden Muster, im Wesentlichen übereinstimmen, eine fehlerhafte Funktion des/der primär messenden Signalpfade/s erkannt wird.

Es ist bevorzugt, dass über ein geeignetes Signal eine Information über den Funktionszustand des/der primär messenden Signalpfade/s, insbesondere gemeinsam mit dem/den Ausgangssignal(en) des/der primär messenden Signalpfade/s, an die elektronische Kontrolleinheit (ECU) übertragen wird, wodurch die elektronische Kontrolleinheit angemessen reagieren kann und besonders bevorzugt eine Abschaltung der Anordnung durchführt. Ganz besonders bevorzugt geschieht dies unter Berücksichtigung sicherheitsrelevanter Anforderungen, so dass ein fehlerhaftes Signal und/oder ein Fehler im Raddrehzahlsensor eines Kraftfahrzeuges nicht in einen kritischen Fahrzustand münden können.

Es ist zweckmäßig, dass die Elemente zur Signalaufbereitung und -verarbeitung als elektronische Schaltungen aufgebaut rind, insbesondere als Teil mindestens eines integrierten Schaltkreises. Hierdurch kann die Anordnung relativ kostengünstig realisiert werden.

Es ist bevorzugt, dass der magnetische Encoder eine permanent magnetisierte Encoderspur aufweist, welche insbesondere aus alternierenden magnetischen Nord-Südpolen besteht, und dass die Sensorelemente einen magnetoresistiven Effekt, besonders bevorzugt den anisotropen magnetoresistiven Effekt nutzen, und insbesondere als Kombination von Streifenleitern aus Permalloy ausgebildet sind. Diese Ausbildungen von Encoder und Sensor haben sich als sehr zuverlässig erwiesen. Außerdem sind diese Produkte aufgrund der Verbreitung leicht verfügbar und relativ kostengünstig.

Vorzugsweise sind die Ebenen der Sensorelemente im Wesentlichen parallel zur Ebene der Encoderspur (XY-Ebene) angeordnet.

Es ist zweckmäßig, dass das/die Sensorelement/e in dem mindestens einen primär messenden Signalpfad eine Halb- oder Vollbrückenkombination aus Streifenleitern ist/sind, wobei die Streifenleiter, insbesondere jeweils, entweder im Fall dass sie keine Barberpole besitzen, unter einem Winkel von im Wesentlichen +45° oder -45° zur Bewegungsrichtung des Encoders (Y-Achse), insbesondere auch in einer entsprechenden Ausrichtung bezüglich der Bewegungsrichtung des Encoders (Y-Achse) gespiegelt, ausgerichtet sind, oder im Fall dass sie jedoch mit Barberpolen versehen sind, im Wesentlichen senkrecht oder parallel zur Bewegungsrichtung des Encoders (Y-Achse), ausgerichtet sind. Hierdurch wird erreicht dass solche Sensorelemente im Normalbetrieb die Bewegungsgeschwindigkeit des Encoders und/oder die Frequenz bezüglich der Frequenz ihrer Ausgangssignale im Verhältnis 1:1 abbilden. Insbesondere funktionieren diese Streifenleiter nach dem anisotropen magnetoresistiven Prinzip. Die Richtungsangaben bezüglich der Ausrichtung der Streifenleiter können auch mit einer Toleranz von +/- 15° betrachtet werden, beziehungsweise die Ausrichtung der Streifenleiter des primär messenden Signalpfades kann um bis zu +/- 15° zu oben genannten Ausrichtungen abweichen, wobei dadurch einerseits Fertigungs- und Einbautoleranzen abgedeckt sind, als auch absichtliche Änderungen bezüglich der Ausrichtung.

Es ist bevorzugt, dass das/die Sensorelement/e in dem mindestens einen beobachtenden Signalpfad eine Halb- oder Vollbrückenkombination aus Streifenleitern ist/sind, wobei die Streifenleiter, insbesondere jeweils, entweder im Fall dass sie keine Barberpole besitzen, im Wesentlichen parallel oder senkrecht zur Bewegungsrichtung des Encoders (Y-Achse) ausgerichtet sind, oder wenn sie jedoch mit Barberpolen versehen sind, unter einem Winkel von im Wesentlichen +45° oder - 45° zur Bewegungsrichtung des Encoders (Y-Achse), insbesondere auch in einer entsprechenden Ausrichtung bezüglich der Bewegungsrichtung des Encoders (Y-Achse) gespiegelt, ausgerichtet sind. Durch diese Anordnung und oder Ausbildung und Ausrichtung der Sensorelemente wird erreicht, beispielhaft für einen rotierenden Körper beschrieben, dass die Ausgangssignale dieser Sensorelement immer im Wesentlichen der doppelten Frequenz des Encoders entsprechen. Hierdurch wird erreicht dass solche Sensorelemente die Bewegungsgeschwindigkeit des Encoders und/oder die Frequenz bezüglich der Frequenz ihrer Ausgangssignale zuverlässig im Verhältnis 1:2 abbilden, wodurch also durch das Sensorelement eine Frequenzverdopplung stattfindet. Insbesondere funktionieren diese Streifenleiter nach dem anisotropen magnetoresistiven Prinzip. Die Richtungsangaben bezüglich der Ausrichtung der Streifenleiter können auch mit einer Toleranz von +/- 15° betrachtet werden, beziehungsweise die Ausrichtung der Streifenleiter des beobachtenden Signalpfades kann um bis zu +/- 15° zu oben genannten Ausrichtungen abweichen, wobei dadurch einerseits Fertigungs und Einbautoleranzen abgedeckt sind, als auch absichtliche Änderungen bezüglich der Ausrichtung. Der mindestens eine beobachtende Signalpfad funktioniert sowohl im Normalbetrieb als auch außerhalb des Normalbetriebs (Störbetrieb) bestimmungsgemäß, insbesondere bezüglich der Frequenz seines mindestens einen Ausgangssignals.

Vorzugsweise sind die mindestens zwei Sensorelemente der beiden unterschiedlichen Signalpfade so aufgebaut und angeordnet, dass der Winkel zwischen der Stromrichtung in einem jeden Streifenleiter jedes Sensorelements des primär messenden Signalpfades und der Feldrichtung des jeweiligen Vorspannmagneten (x-Richtung) im Wesentlichen 45°+n*90° beträgt, insbesondere mit einer Toleranz von +/- 15°, und der Winkel zwischen der Stromrichtung in einem jeden Streifenleiter jedes Sensorelements des beobachtenden Signalpfades und der Feldrichtung des jeweiligen Vorspannmagneten (x-Richtung) im Wesentlichen n*90°, insbesondere mit einer Toleranz von +/- 15°, beträgt.

Es ist zweckmäßig die Streifenleiter mit Barberpolen zu versehen, um eine Linearisierung der Ausgangssignale bezüglich eines definierten Winkels zu erreichen.

Es ist bevorzugt, dass mindestens ein Stützmagnet senkrecht zur Bewegungsrichtung des Encoders angeordnet ist und insbesondere auf das mindestens eine Sensorelement des mindestens einen primär messenden und des mindestens einen beobachtenden Signalzweiges wirkt.

Vorzugsweise sind ein oder mehrere, insbesondere alle, Sensorelement/e mit einem Permanentmagneten und/oder einer Spule versehen. Hierdurch wird den Streifenleitern eine interne Vorzugsrichtung der Magnetisierung vorgegeben, wodurch ebenfalls eine Linearisierung der Kennlinie der Ausgangssignale erreicht werden kann und ein magnetisches Stützfeld beziehungsweise Vorspannfeld erzeugt wird, welches solch ein Sensorelement relativ unempfindlich gegenüber einem Umschlagen/Invertieren der Orientierung der Feldkomponente der inneren Magnetisierung in Richtung der Formanisotropie macht.

Es ist zweckmäßig, dass die Sensorelemente der verschiedenen Signalpfade, insbesondere zusätzlich mit den Elementen zur Signalaufbereitung und -verarbeitung, auf einem gemeinsamen Chip integriert sind. Hierdurch können Kosten gesenkt werden.

Darüber hinaus betrifft die Erfindung auch eine Verwendung des erfindungsgemäßen Verfahrens und/oder der erfindungsgemäßen Anordnung in Kraftfahrzeugen, insbesondere in mindestens einem Raddrehzahlsensorsystem.

Das erfindungsgemäße Verfahren und die erfindungsgemäße Anordnung können in allen Bereichen verwendet werden, in denen die Bewegungen von Körpern, welche magnetische Encoder aufweisen, von Sensoren erfasst werden. Dies betrifft sowohl die Erfassung linearer Bewegungen als auch die Erfassung von Rotationsbewegungen und Kombinationsbewegungen, beispielsweise die Bewegung eines Transportbandes. Es ist vorzugsweise ein Einsatz des erfindungsgemäßen Verfahrens und der erfindungsgemäßen Anwendung in der Automatisierungstechnik, insbesondere in Industrieanwendungen, besonders bevorzugt in der Robotik vorgesehen. Dabei ist dies insbesondere zur Erhöhung der Eigensicherheit einer Anordnung zur Drehzahlerfassung vorteilhaft und ganz besonders bevorzugt in Anordnungen und/oder Systemen zur Raddrehzahlerfassung. Das erfindungsgemäße Verfahren und die erfindungsgemäße Anordnung sind dabei aufgrund ihrer Auslegung für sicherheitskritische Anwendungen ganz besonders bevorzugt für den Einsatz Kraftfahrzeugen, insbesondere in Raddrehzahlerfassungssystemen von Kraftfahrzeugen, Krafträdern, Lastkraftwagen und Anhängern geeignet.

Bevorzugt wird der in der Anordnung enthaltene erfindungsgemäße Sensor sowohl auf eine direkte Hardwareausbildung bezogen, wobei die Ausbildung, insbesondere als integrierter Schaltkreis, auf einem oder mehreren Chips angeordnet sein kann. Außerdem bezieht sich die Erfindung, insbesondere der erfindungsgemäße Sensor, besonders bevorzugt Teile des Sensors, auch auf Hardware-Strukturen, welche durch den Einsatz einer Software so angesteuert und/oder betrieben und/oder beschaltet werden, dass durch Softwaremittel äquivalente Funktionsweisen und/oder Verhaltensweisen von Schaltungen erzeugt und/oder abgebildet werden. In diesem Fall bezieht sich die Erfindung, insbesondere der erfindungsgemäße Sensor, besonders bevorzugt Teile des Sensors, auch ganz besonders bevorzugt auf eine Software, welche zur obig beschriebenen äquivalenten Abbildung von Schaltungen, insbesondere integrierten Schaltungen, auf dafür geeigneten Hardware-strukturen wie PLDs(programmable logic devices) oder FP-GAs(field programmable gate arrays) geeignet ist.

Weitere bevorzugte Ausführungsformen ergeben sich aus den abhängigen Ansprüchen und der nachfolgenden Beschreibung von Ausführungsbeispielen anhand von Figuren.

Es zeigen in schematischer und beispielhafter Darstellung:
- Fig. 1: Raddrehzahlerfassungssysteme gemäß dem Stand der Technik,
- Fig. 2: den schematischen Aufbau typischer Sensormodule,
- Fig. 3: die Bezugsrichtungen im Rahmen der Anordnung zur Drehzahlerfassung,
- Fig. 4: den Feldlinienverlauf an einem alternierend magne- tisierten Maßstab,
- Fig. 5: unterschiedliche Varianten von Messort und Sensor- ausrichtung bezüglich der Encoderspur,
- Fig. 6: physikalische Zusammenhänge bei Feldstärkemessun- gen in Y-Richtung,
- Fig. 7: unterschiedliche Kennlinien in Abhängigkeit der Streifenausrichtung von Sensorelementen bezüglich der Encoderspur,
- Fig. 8: den zeitlichen Verlauf des Ausgangssignals eines Sensorelements, dessen Sensorfläche so ausgerich- tet ist, dass ein Magnetfeld sich bezüglich beider Richtungskomponenten dieser Sensorfläche perio- disch dreht,
- Fig. 9: eine beispielhafte Anordnung zur eigensicheren Drehzahlerfassung,
- Fig. 10: unterschiedliche Signalprotokolle,
- Fig. 11: äquivalente Strukturen von Sensorelementen bezüg- lich der Ausrichtung ihrer Streifenleiter zur En- coderspur,
- Fig. 12: Ausführungsformen bezüglich der Anordnung und Aus- bildung der Streifenleiter von Sensorelementen.

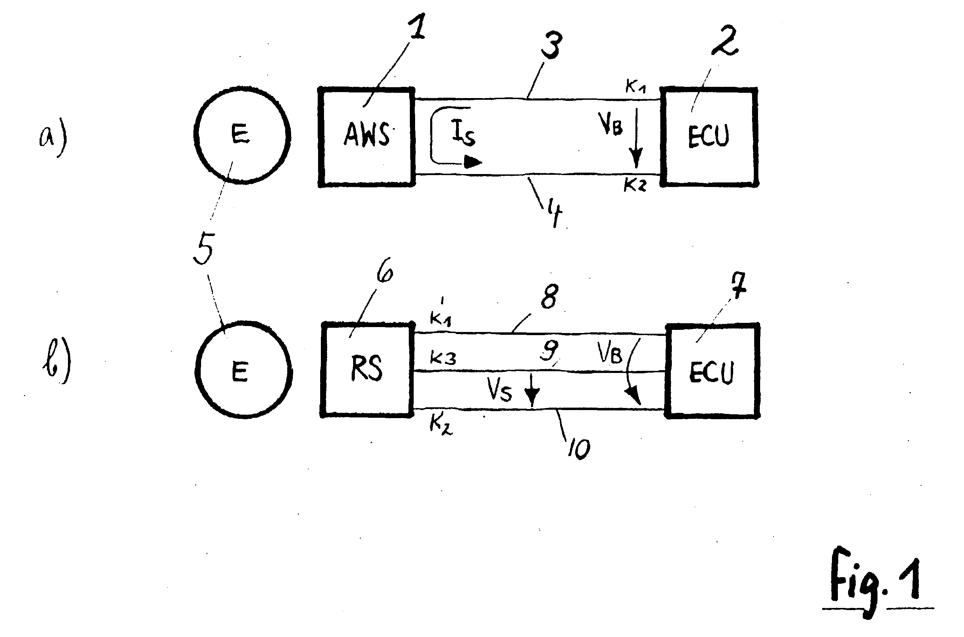

Fig. 1 zeigt beispielhaft zwei bekannte Anordnungen zur Raddrehzahlerfassung. In Fig. 1a) sind Sensor 1 und elektronische Kontrolleinheit ECU 2 des Kraftfahrzeugregelungssystems (Elektronisches Steuergerät des ABS-Reglers) 2 über eine Zweidrahtleitung 3, 4 elektrisch miteinander verbunden. Zum Betrieb des Sensors ist eine Betriebsspannung VB erforderlich, die von der ECU an den Klemmen K1, K2 bereitgestellt wird. Der aktive Sensor 1 wird so über die Zweidrahtleitung 3,4 mit Energie versorgt. Der magnetische Encoder 5 moduliert durch seine Rotation das ihn umgebende Magnetfeld, welches durch Sensor 1 erfasst wird. Dabei moduliert Sensor 1 in Abhängigkeit der Encoderrotation die Amplitude des Signalstroms Is, wodurch die Raddrehzahlinformationen in codierter Form an die ECU 2 übertragen werden, wo diese Raddrehzahlinformationen wieder decodiert werden. Fig. 1b) zeigt einen anderen Sensor 6, welcher über eine 3-Drahtleitung 8, 9, 10 mit ECU 7 elektrisch verbunden ist. Auch aktiver Sensor 6 bezieht seine Energie aus der ECU7. Sensor 6 überträgt die Raddrehzahlinformationen durch die Spannung Vs, welche zwischen Leitungen 9, 10 anliegt, an ECU 7.

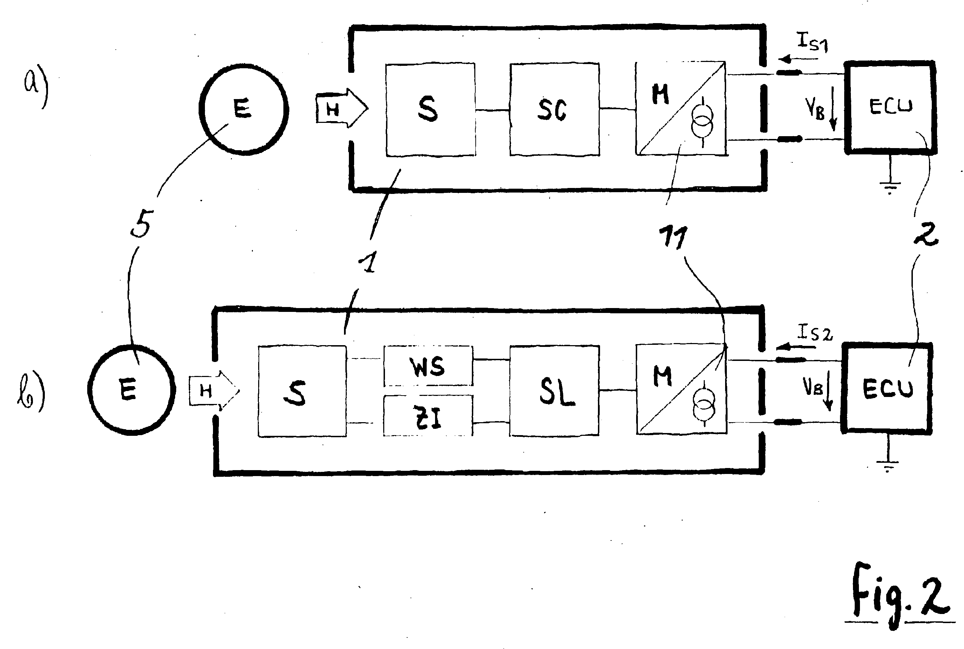

Fig. 2 zeigt den inneren Systemaufbau zweier typischer bekannter Varianten von aktiven Raddrehzahlsensoren mit 2-Draht-Schnittstelle. Dabei zeigt Fig. 2a) einen Raddrehzahlsensor ohne Zusatzfunktionen. Raddrehzahlsensor 1 besteht aus dem magnetoresistiven Sensorelement S in Kette mit einer elektronischen Signalaufbereitungsstufe SC. Das Sensorelement ist über ein magnetisches Feld H an den Encoder gekoppelt. Der mit Raddrehzahl rotierende Encoder moduliert das Luftspaltfeld H mit einem inkrementalen Muster, das die Raddrehzahlinformation enthält. Sensorelement S und die Signalaufbereitungsstufe SC erzeugen aus dieser Luftspaltfeldmodulation eine Signalspannung zur Steuerung einer Modulatorstufe M, die ihrerseits eine Stromquelle 11 steuert, so dass das inkrementale Muster des Encoders als eingeprägter Signalstrom IS1 abgebildet wird. Fig. 2b) veranschaulicht den Aufbau bekannter Raddrehzahlsensoren mit zusätzlichen Funktionen. Im Unterschied zur Ausführungsform von Fig. 2a) vorher ist hier die Signalaufbereitungsstufe in die Pfade WS und ZI zweigeteilt. Die Stufe WS dient der Aufbereitung der Raddrehzahlinformation aus dem Encodersignal, während ZI der separaten Aufbereitung von Zusatzinformationen aus der Sensor/Encoder-Schnittstelle dient. Solche Zusatzinformationen sind beispielgemäß Drehrichtung und Luftspaltmaß. In einer Signalstufe SL werden die von WS und ZI aufbereiteten Signale zu einem Steuersignal für die Modulatorstufe M verarbeitet und zusammengefügt, die ihrerseits eine Stromquelle 11 steuert, so dass das in dem Steuersignal enthaltene Protokoll von Raddrehzahl- und Zusatzfunktionen als eingeprägter Signalstrom IS2 abgebildet wird. Zur Übertragung der Daten ist es bekannt 3-Pegel-Protokolle oder PWM-Protokolle (Puls Weiten Modulation) zu verwenden.

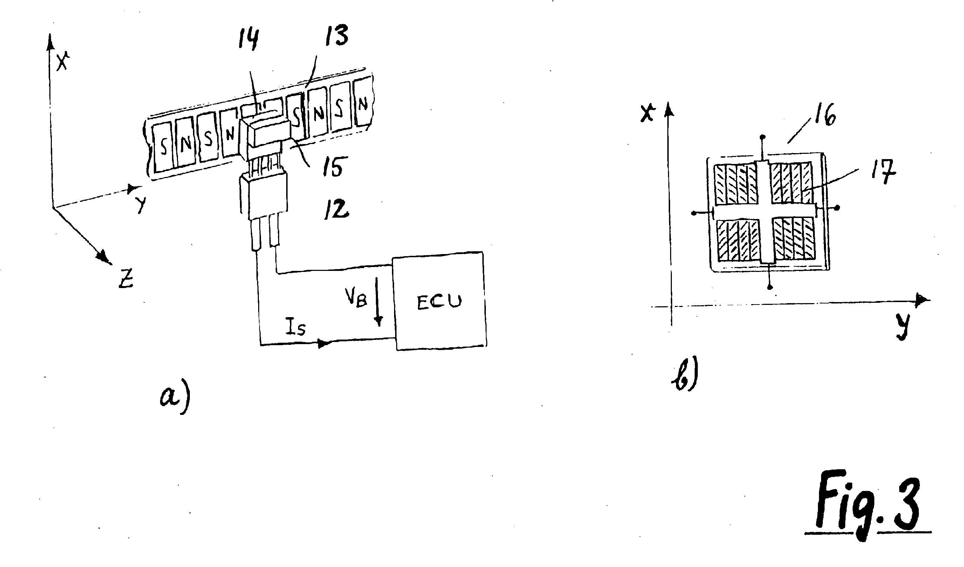

Fig. 3 definiert für die in den Figuren gezeigten Beispiele ein kartesisches Koordinatensystem in Bezug zur Encoderspur 13 und zu Sensormodul 12. Fig. 3a) zeigt ein magnetoresistives Sensormodul 12 bekannter Art, welches gemäß dem Beispiel nach Fig. 2a) aufgebaut ist, in seiner geometrischen Ausrichtung zu einer alternierend, permanent magnetisierten Encoderspur 13. Die Fläche von Encoderspur 13 liegt in der XY-Ebene und der Encoder und damit die Encoderspur 13 bewegen sich relativ zum Sensorelement in Y-Richtung. Teil 14 des Sensorelements enthält eine Brückenschaltung 16 aus vier magnetoresistiven Permalloy-Barberpole-Widerständen 17, wie sie in Fig. 3b) dargestellt sind. Die Ebene der Widerstandsschichten ist ebenfalls wie die des Encoders parallel zur XY-Ebene ausgerichtet.

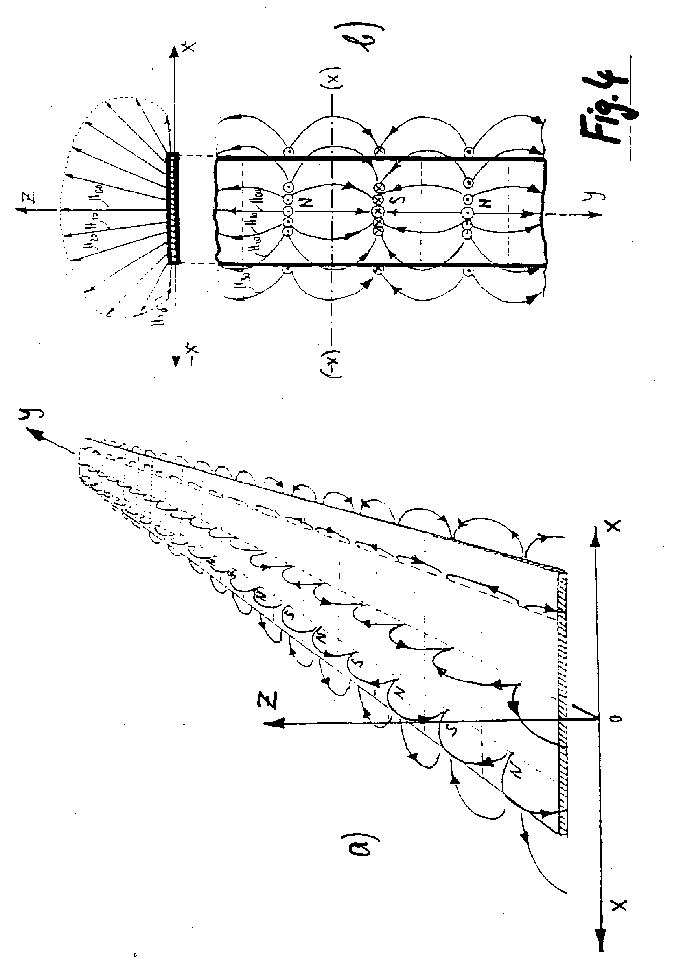

Fig. 4 erläutert und veranschaulicht beispielhaft den ortsabhängigen Verlauf der magnetischen Feldlinien eines alternierend magnetisierten Encoder. Dabei kann dieser als eine rotationssymmetrische Ausbildung angesehen werden, deren Krümmung vernachlässigt wird, oder als gerade, stabförmige Ausbildung. Fig. 4a) zeigt dabei die Abwicklung eines Encoders im XYZ-Koordinatensystem. Die Encoderspur und damit ihre Oberfläche, liegt parallel zur XY-Ebene und weist eine gleichmäßige Folge alternierender Nord/Südpole in Y-Richtung auf. Die Feldlinien des von der Encoderspur erzeugten Magnetfeldes verlaufen im mittleren Bereich des Encoders (um X=0) im Wesentlichen nur in der YZ-Ebene. Das heisst, diese Feldlinien weisen nur Komponenten in Y- und in Z-Richtung auf. Mit zunehmendem Abstand der magnetischen Feldlinien von der Mittellinie des Encoders in Y-Richtung, neigen sich ihre Austrittswinkel zusätzlich in X-Richtung, weisen also Komponenten in allen drei Richtungen auf. Feldlinien welche seitlich aus der Encoderspur austreten weisen dagegen nur Komponenten in der X- und Y- Richtung auf, dass heißt diese Feldlinien verlaufen und drehen sich in der XY-Ebene. Fig. 4b) veranschaulichen die Encoderspur mit dem prinzipiellen Verlauf ihrer magnetischen Feldverteilung in Frontansicht und Draufsicht. Die Symbole Kreis mit Punkt kennzeichnen austretende Feldlinien, Kreise mit Kreuz kennzeichnen eintretende Feldlinien. Die Frontansicht zeigt das Richtdiagramm der Feldlinien an einer Schnittstelle (-x)-(x) mit der Feldlinie H00 ohne X-Komponente, den Feldlinien H10, H20 mit geringer X-Komponente und der Feldlinie H30 mit starker X-Komponente.

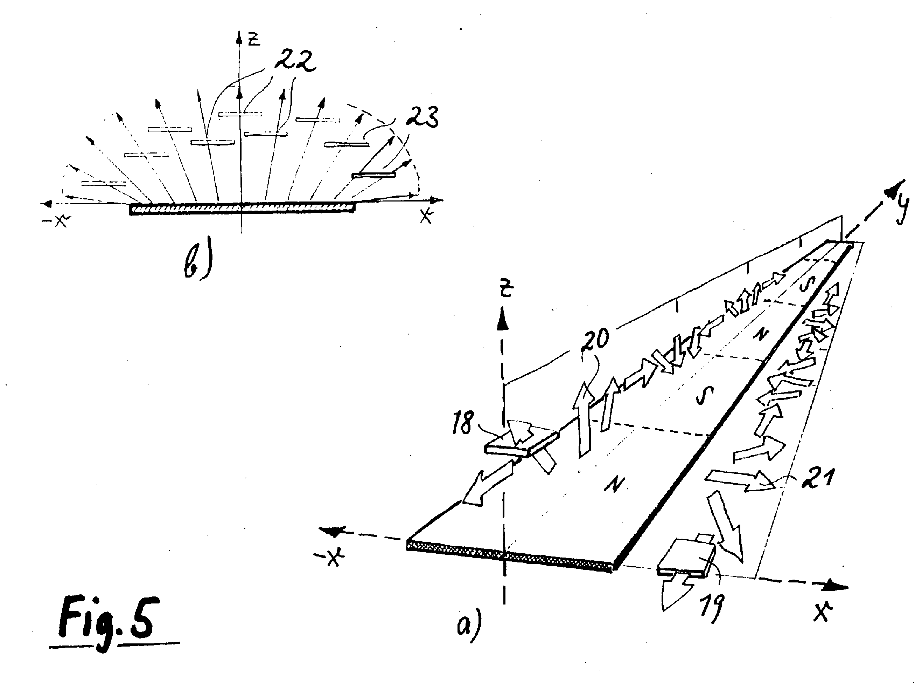

Fig. 5a) zeigt beispielhaft eine Encoderspur gemäß Fig. 4 in Kombination mit zwei identisch ausgebildeten magnetoresistiven sensorischen Flächenstrukturen 18, 19 entsprechend Fig. 3b, beziehungsweise den Flächen zweier Sensorelemente, in paralleler Ausrichtung zur XY-Ebene in zwei ausgezeichneten Bereichen des magnetischen Encoderfeldes. Hierbei ist Flächenstruktur 18 im Wesentlichen parallel zur Encoderspur über deren Mitte angeordnet und Flächenstruktur 19 seitlich der Encoderspur und parallel zur Encoderspuroberfläche. Bei einer Relativbewegung zwischen der Encoderspur und den Sensorelementen 18, 19 in Y-Richtung, reagiert Sensor 18 ausschließlich auf die Y-Feldstärkekomponente des in der YZ-Ebene rotierenden magnetischen Vektors, Sensor 19 hingegen sowohl auf die Y-Komponente als auch auf die X-Komponente des in der XY-Ebene rotierenden magnetischen Encoderfeldes. Fig. 5b) zeigt eine Vielfalt möglicher örtlicher Anordnungen von Sensorelementen in Relation zur Encoderspur, die als Mischformen der Anordnungen 18, 19 betrachtet werden können. Bei Anordnungen im Raumbereich 22 stehen die Ebenen des Sensorelementes und des rotierenden magnetischen Feldvektors nahezu senkrecht zueinander. Derartige Anordnungen werden beispielsweise zur Feldstärkemessung und Raddrehzahlerfassung verwendet.

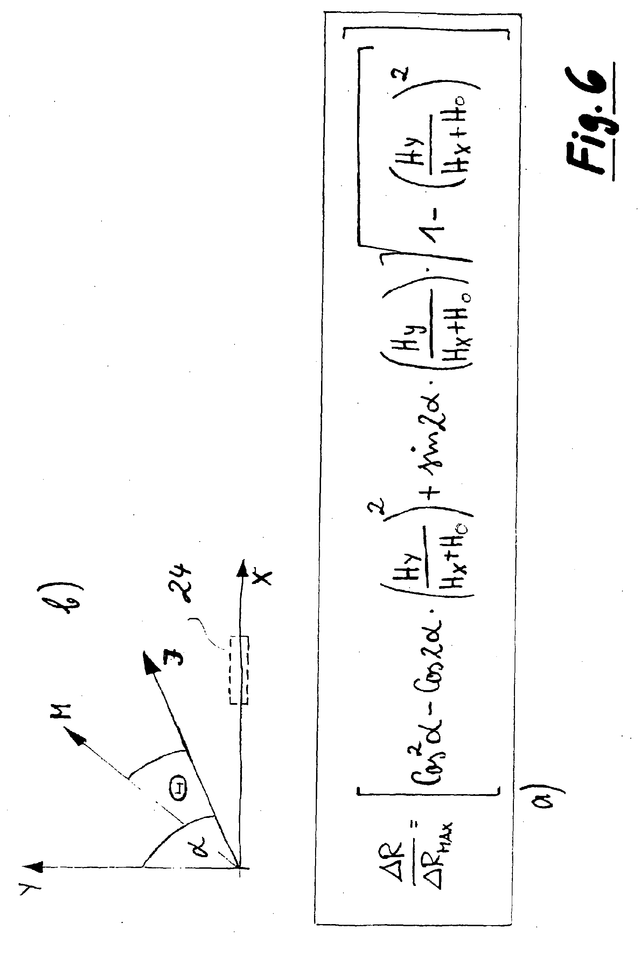

Normalerweise werden hierbei meistens Sensoren mit linearem Kennlinienverlauf genutzt, um zu erreichen, dass die Periode des Sensorausgangssignals die Polteilungen des Encoders (Zahn/Lücke bzw. Nord/Südpol) im Wesentlichen im Verhältnis 1:1 abbildet. Es ist bekannt, dass dies beispielsweise dadurch erreicht wird, wenn nach Fig. 6b) ein Winkelversatz von α=45° zwischen der Stromflussrichtung J durch einen magnetoresistiven Streifenleiter 24 und der Längsachse (leichte Achse, welche durch die interne magnetische Vorzugsrichtung vorgegeben ist) dieses Streifenleiters eingestellt ist und diese Längsachse gleichzeitig in Richtung der X-Koordinate ausgerichtet ist. Die Formel in Fig. 6a) beschreibt den Zusammenhang zwischen der relativen Widerstandsänderung eines anisotropen magnetoresistiven Widerstandes und der äußeren magnetischen Aussteuerung. Wobei mit der magnetischen Aussteuerung das Verhältnis der äußeren magnetischen Feldstärke in y-Richtung zur Anisotropiefeldstärke gemeint ist.

Im Weiteren bedeuten:
- dR/dRmax = ΔR/ΔRmax = relative Widerstandsänderung eines magnetoresistiven Streifenleiters
- Hx, Hy, = Magnetische Feldkomponenten in X,Y-Richtung
- HO = Anisotropiefeldstärke
- Hy/HO = magnetische Aussteuerung
- Y/λ = Ortsverschiebung entlang der Y-Achse bezogen auf die magnetische Wellenlänge λ (N/S-Polpaar) des Encoders
- α = Stromflusswinkel gegenüber der leichten Achse (bevorzugt über die Richtung der Formanisotropie festgelegt) des Streifenleiters
- Θ = Winkel zwischen Stromfluss und innerer Magnetisierung des Streifenleiters

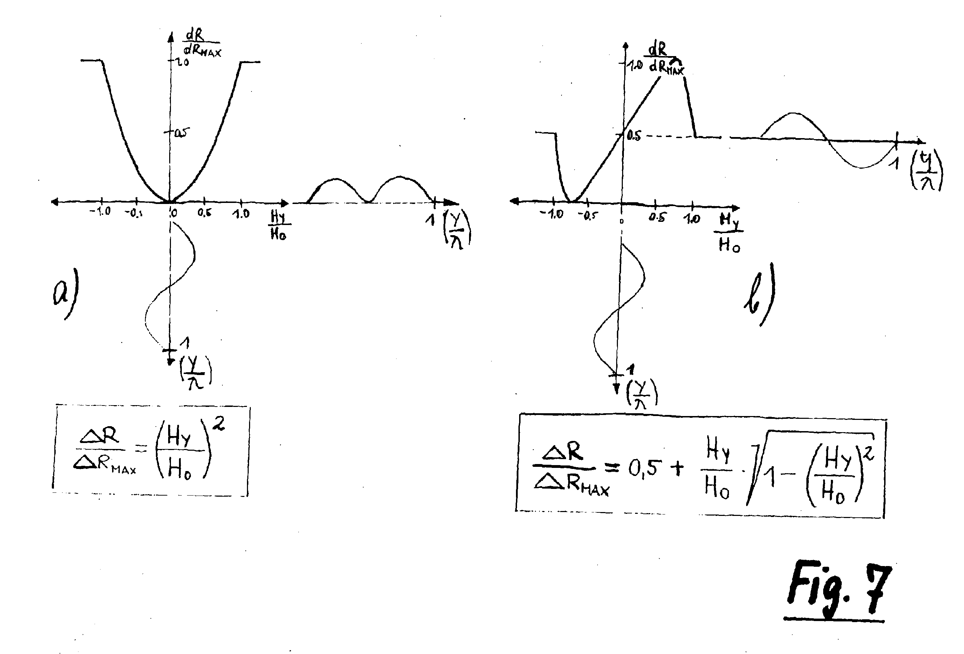

Fig. 7b) zeigt die sich entsprechend der Formel aus Fig. 6a) ergebende sensorische Kennlinie für einen Winkel α=45° sowie ohne Stabilisierungsfeld (Hx = 0kA/m) und dass durch sie die Ortsfrequenz, mit der die periodische Widerstandsänderung bezüglich der im Zuge einer Bewegung des Encoders vom Sensor erfassten Polpaare und die diesbezüglichen Winkeländerungen der inneren Magnetisierung gemeint ist, der magnetischen Aussteuerung (Hy/H0) in eine frequenzgleiche Widerstandsänderung dR/dRmax übertragen wird. Diese Kennlinie zeigt das in gewissen Grenzen lineare Verhalten des Sensorelements. Dieses Verhalten wird häufig zur Erfassung der Encoderrotation in Raddrehzahlsensoren verwendet. Eine solche lineare Kurve, die aus dem Winkel α=45°herrührt, wird häufig durch Barberpolstrukturen verwirklicht. Dabei fließt der Strom durch das mit einem relativ großen Widerstand behaftete Permalloy alternierend durch Metallstreifen hoher Leitfähigkeit, wobei diese Metallstreifen schräg, in einem Winkel von 45° auf dem Streifenleiter angebracht sind. Der Strom fließt nun über den Weg geringsten Widerstandes, also einen möglichst kurzen Weg über die ebenfalls schrägen Streifen Permalloy, wodurch eine Vorzugsrichtung des Stromflusses von nahezu 45° erreicht wird, im Gegensatz zum Weg des Stroms durch die Metallstreifen.

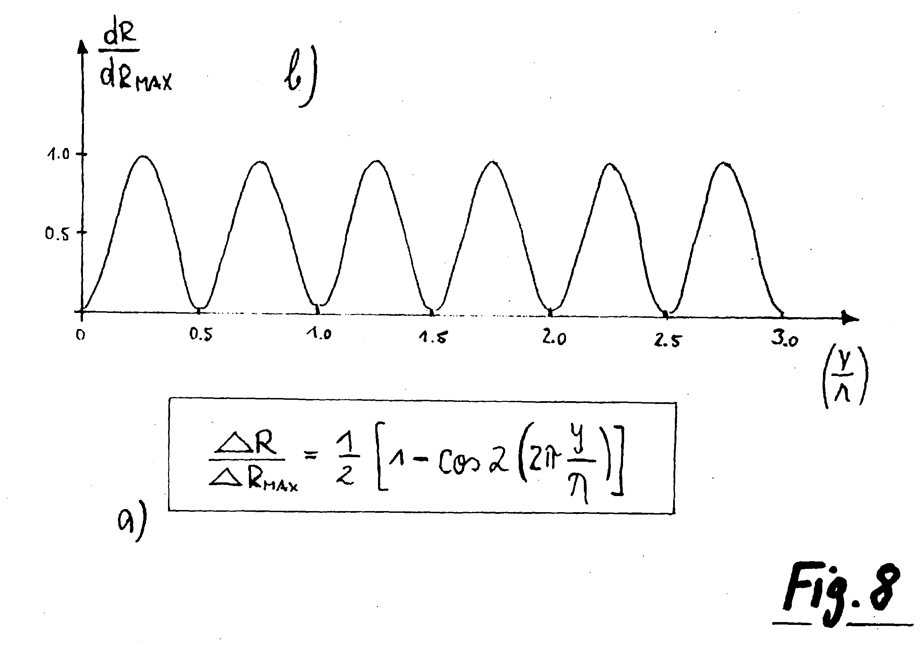

Für ein solches Sensorelement mit einem Winkel α=45° in Position 19 gemäß Fig. 5a), dessen Wirkebene in der Ebene des rotierenden Feldstärkevektors (XY-Ebene) liegt, entsteht ein Verlauf der Widerstandsänderung, der vereinfacht nach Fig. 8a) beschrieben werden kann, wobei die Ortsfrequenz des Encoderfeldes mit doppelter Frequenz übertragen wird, wie es in Fig. 8b) dargestellt ist. Diese Positionierung eines solchen Sensorelements mit beschriebenen bezüglich des Sensorelementsausgangssignals frequenzverdoppelnden Eigenschaften ist einer Anordnung für Winkelmessungen vergleichbar.

Wird ein Sensorelement in Raumbereichen 23 gemäß Fig. 5b) betrieben, kann es daher geschehen, dass die angestrebte lineare Übertragung der Ortsfrequenz des Encoderfeldes durch Überlagerung von Signalanteilen doppelter Frequenz gestört wird. Eine zu starke Hx-Komponente des rotierenden Magnetfeldvektors, insbesondere eine von außerhalb der Anordnung als Störung einwirkende Hx-Komponente, kann gleichzeitig die Hx-Stützfeldstärke des üblicherweise zur Stabilisierung einer Kennlinie nach Fig. 7b) verwendeten zusätzlichen Permanentmagneten 15, dargestellt in Fig. 3a), soweit kompensieren, dass periodische sprunghafte und/oder kontinuierliche Spiegelungen dieser Kennlinie auftreten, was ebenfalls eine unerwünschte Störung, insbesondere eine Verdopplung, des Ausgangssignals des Sensorelements bezüglich der erfassten Encoderbewegungen bewirkt. Dieser Vorgang beziehungsweise solch ein Verhalten der Sensorelementausgangssignale wird als auch 'Flippen' bezeichnet. Es können auch Kombinationen und Überlagerungen verschiedener erwähnter Störungen, insbesondere solcher, welche als "Flippen" bezeichnet werden, auftreten. Das Auftreten einer solchen Frequenzverdopplung aufgrund einer oder aufgrund einer Kombination dieser beschriebenen Ursachen ist beispielsweise dann gegeben, wenn:
- Der Encoder nur eine schmale magnetische Lesespur besitzt,
- eine starke Magnetisierung besitzt.
- das Sensormodul relativ weit außerhalb der Mitte der Lesespur positioniert ist,
- das Sensormodul sehr nahe an der Encoderoberfläche positioniert ist.

Technisch werden alle unbeabsichtigten Frequenzverdopplungsvorgänge, insbesondere für die Raddrehzahlerfassung, als störend und unerwünscht angesehen.

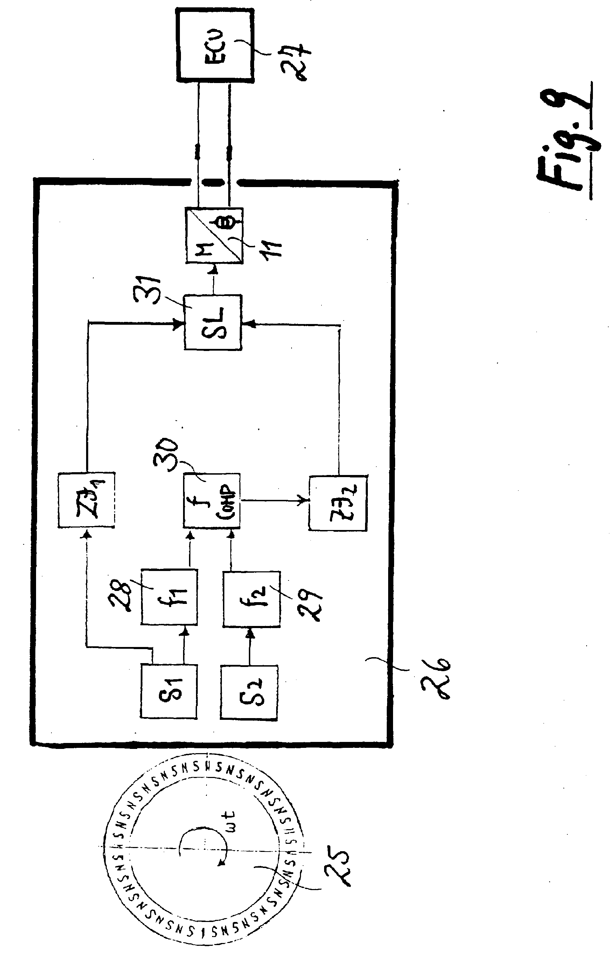

Fig. 9 zeigt eine beispielhafte Anordnung zur Eigensicheren Raddrehzahlerfassung, bestehend aus einem Encoder 25 und dem eigensicheren Sensor 26, welcher mit ECU 27 elektrisch leitend über eine 2-Draht-Leitung verbunden ist. Sensor 26 enthält zwei magnetoresisitive, insbesondere anisotrop magnetoresistive, Sensorelemente S1 und S2, die mit Encoder 25 magnetisch gekoppelt sind. Aus den Ausgangssignalen der Sensorelemente S1, S2 wird über eine zugehörige Signalaufbereitungsstufe 28,29 ein Raddrehzahlsignal aufbereitet. Sensorelemente S1, S2 und Signalaufbereitungsstufen 28,29 sind jeweils Teil zweier getrennter Signalpfade. Dabei existiert ein primär messender Signalpfad mit Sensorelement S1 und Signalaufbereitungsstufe 28 und ein beobachtender Signalpfad mit Sensorelement S2 und Signalaufbereitungsstufe 29. Für den beispielhaften Fall eines Raddrehzahlsensors vom Typ gemäß Fig. 2b, wie er hier als übergreifendes Beispiel dargestellt ist, wird aus Sensorelement S1 eine Zusatzinformation ZI1 abgeleitet, die in ihrer Funktionalität derjenigen unter ZI in Fig. 2b beschriebenen entspricht. Die Signalfrequenzen der Signalaufbereitungstufen 28 und 29 werden in einem Vergleicher, hier beispielhaft in einer Frequenz-Komparatorstufe 30, auf Übereinstimmung verglichen. Komparatorstufe 30 erzeugt als Ergebnisprotokoll ein Zustands-Bit bezüglich der Übereinstimmung oder Nichtübereinstimmung der Signalfrequenzen. Es ist beispielhaft vorgesehen, dass aus dem Signalvergleich zusätzliche Diagnoseinformation abgeleitet und übertragen wird. Das Signal der Komparatorstufe wird Signallogik 31 zugeführt. Signallogik 31, insbesondere als elektrische Schaltung ausgebildet, erzeugt ein Signalprotokoll, dass die Information des Frequenzkomparators 30, sowie insbesondere zusätzlich Zusatzinformationen, enthält. Über den Modulator M und die Stromquelle 11 wird dann das Signalprotokoll als Signalstrommuster abgebildet und an ECU 27 übertragen.

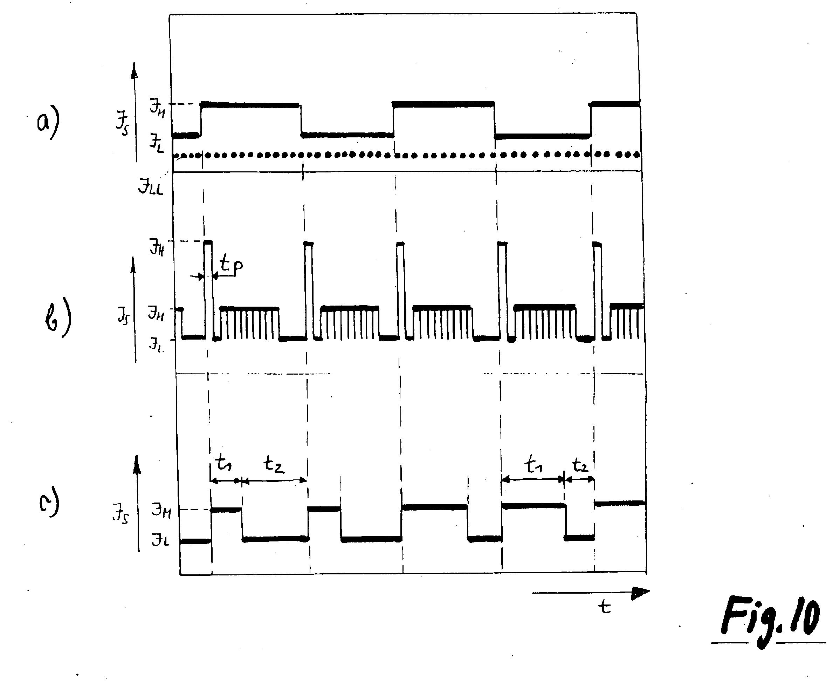

Fig. 10 zeigt gegenwärtig gebräuchliche Signalprotokolle und Möglichkeiten zur Übertragung von Diagnoseinformation bezüglich einer Frequenzstörung an die ECU.

Fig. 10a) zeigt das 2-Pegel-Protokoll, das sich als Standard für unidirektionale Raddrehzahlerfassung etabliert hat. Hier wird als Beispiel der Zustand der störenden Frequenzverdopplung gegenüber der ECU durch einen konstanten Ruhepegel ausgewiesen.

Fig. 10b) zeigt ein 3-Pegel-Protokoll, das von der Automobilindustrie ebenfalls verwendet wird. Während die Drehzahlinformation über die Pegel Jh erkannt wird, werden verschiedene Zusatzinformationen wie Drehrichtung, Luftspaltmaß in einer seriellen Folge von Bits im Pegelbereich Im und J1 kodiert. Es besteht die vorteilhafte Möglichkeit eines dieser Bits zur Kodierung der Verdopplungsdiagnose zu nutzen. In Verbindung mit der bereits vorhandenen Luftspaltdiagnose lässt sich eine wesentlich verbesserte Einbausicherheit kontrollieren.

Fig. 10c) zeigt ein PWM-Protokoll, das von der Automobilindustrie ebenfalls genutzt wird. Hier kann der Zustand des Verdoppelns über ein bestimmtes Pulsweitenverhältnis gegenüber der ECU ausgewiesen werden.

Bezogen auf Fig. 9 ist der Signalpfad von S1, der primär messende Signalpfad, mit einer Abbildung der Encoderfrequenz von 1:1 und der Signalpfad von S2, der beobachtende Signal-pfad, mit einer Abbildung der Encoderfrequenz von 2:1, also einer Frequenzverdopplung, ausgebildet.

In einer beispielhaften erfindungsgemäßen Ausführungsform der Anordnung werden die Stufen 28,29,30,31,M,11 als integrierter elektronischer Schaltkreis und die Sensorelemente S1 und S2 unter Nutzung des anisotropen magnetoresisitiven Effektes als Kombination von Streifenleitern aus Permalloy ausgebildet, die zum Teil oder in ihrer Gesamtheit durch das Stützfeld eines kointegrierten Permanentmagneten beaufschlagt werden. Sensorelemente S1 und S2 können auf einer Chipebene kointegriert gefertigt werden. Bei geeigneter Anordnung der sensorischen Streifenleiter kann aus internen Teilsignalen des Sensorelements S2 eine unzulässige Positionsverschiebung des Sensorelements S1 zum Encoder 5,25 diagnostiziert werden. Es ist bevorzugt, diese Zusatzinformation ebenfalls an die ECU zu übertragen, beispielhaft unter Nutzung eines Protokolls gemäß Fig. 10b).

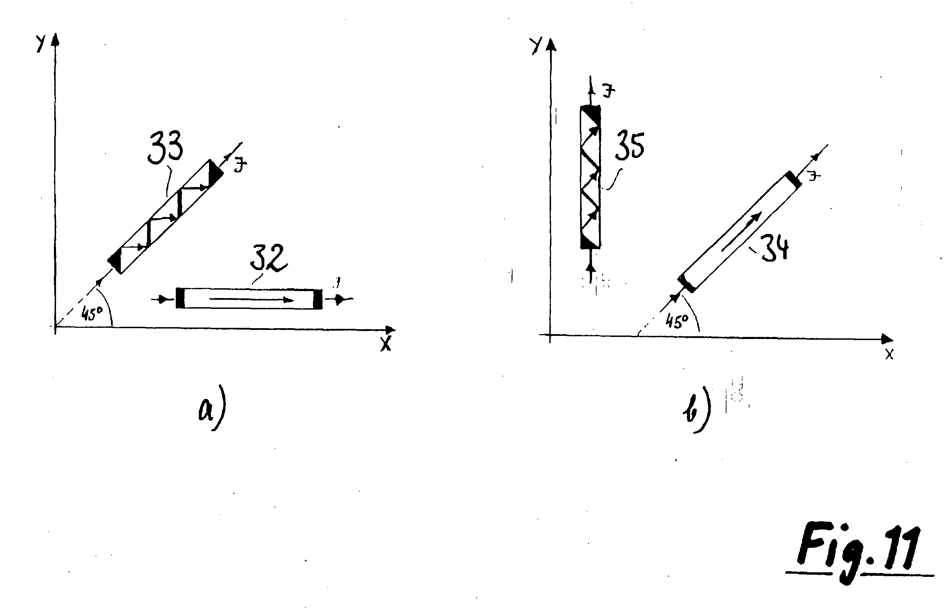

Zur beispielhaften Realisierung der Sensorstruktur des Sensorelements S1, also des Sensorelements des primär messenden Signalpfades, werden vorzugsweise Halb- oder Vollbrückenkombinationen aus Streifenleitern mit linearisierter Kennlinie gemäß Fig. 7b) genutzt. Unter Maßgabe des gemeinsamen Bezugskoordinatensystems nach Fig. 3a) sind hierbei nach Fig. 11b) ein unter 45° bezüglich der Bewegungsrichtung des Encoders 5,25 ausgerichteter Streifenleiter ohne Barberpole 34 und alternativ parallel ausgerichteter Streifenleiter bezüglich der Bewegungsrichtung des Encoders 5,25 mit Barberpolen 35 in ihrer Funktionalität gleichwertig. Das gleiche gilt für eine Spiegelung dieser Streifenleiter um die X-Achse. Auch eine Drehung eines Streifenleiters um 90° bezüglich des Ursprungs des Koordinatensystems, wobei die Bewegungsrichtung des Encoders 5,25 entlang der Y-Achse verläuft, ändert insbesondere nicht die Funktionalität des Streifenleiters.

Zur beispielhaften Realisierung der Sensorstruktur des Sensorelements S2, also des Sensorelements des beobachtenden Signalpfades, werden vorzugsweise Halb- oder Vollbrückenkombinationen aus Streifenleitern mit quadratischer Kennlinie gemäß Fig. 7a) genutzt, die für α=90° und Hx = 0 kA/m (kein Stabilisierungsfeld) entstehen. Fig. 7a) zeigt, dass die Ortsfrequenz der magnetischen Aussteuerung (Hy/HO) in eine Widerstandsänderung dR/dRmax doppelter Frequenz übertragen wird. Dieser Signalverlauf kann weder durch Flipping noch durch die bezüglich Fig. 8 besprochenen Einflüsse gestört werden und erfüllt so vorzugsweise die Anforderungen für einen beobachtenden Signalpfad. Unter Maßgabe des gemeinsamen Bezugskoordinatensystems gemäß Fig. 3a) sind hierbei nach Fig. 11a) ein unter 90° bezüglich der Bewegungsrichtung des Encoders 5,25 ausgerichteter Streifenleiter ohne Barberpole 32 und ein unter 45° bezüglich der Bewegungsrichtung des Encoders 5,25 ausgerichteter Streifenleiter mit Barberpolen 33 in ihrer Funktionalität gleichwertig. Das gleiche gilt für Spiegelung dieser Streifen um die X-Achse. Auch eine Drehung eines Streifenleiters um 90° bezüglich des Ursprungs des Koordinatensystems, wobei die Bewegungsrichtung des Encoder 5,25 entlang der Y-Achse verläuft, ändert insbesondere nicht die Funktionalität des Streifenleiters.

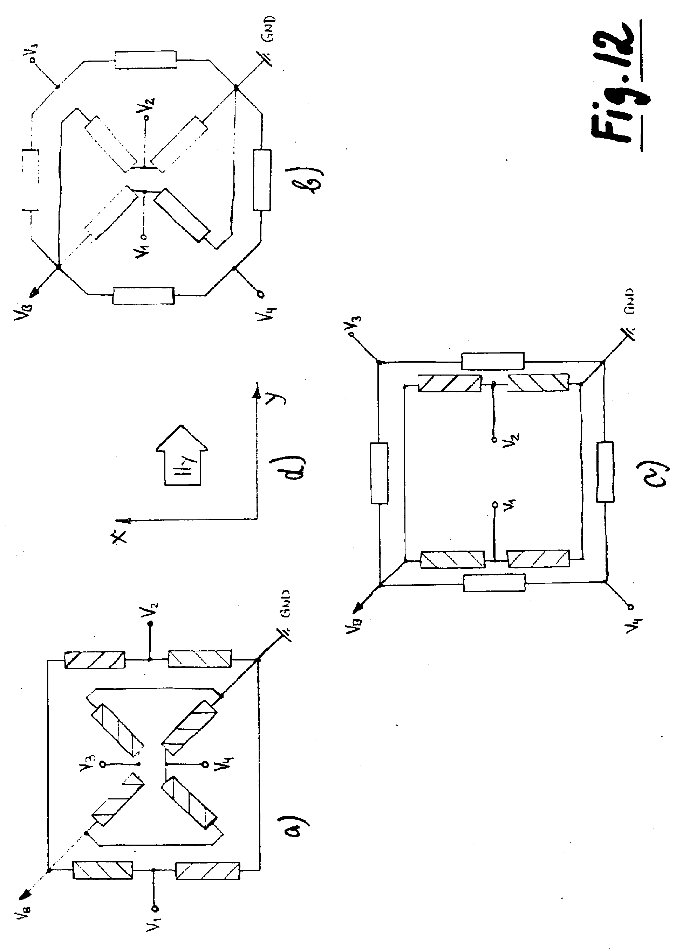

Fig. 12 zeigt drei Ausführungsbeispiele von Brückenkombinationen zur Realisierung der Sensorstrukturen der Sensorelemente S1,S2. Die jeweils 8 magnetoresistiven Widerstände sind zu Einzelstreifen (Streifenleitern) stilisiert, um gleichzeitig die erforderliche Streifenausrichtung gegenüber dem Koordinatensystem Fig. 12d) zu kennzeichnen. Eine Schraffur der Streifenleiter kennzeichnet eine Ausführung mit Barberpolen, ein Streifenleiter ohne Schraffur eine Ausführung ohne Barberpole. Die Spannungs- oder Stromversorgung der Brücken erfolgt jeweils über die Anschlüsse VB, GND. Das Signal des primär messenden Signalpfades mit Sensorelement S1 wird jeweils an den Klemmen V1, V2 abgegriffen. Das Signal des beobachtenden Signalpfades mit Sensorelement S2 mit verdoppelnder Frequenz wird jeweils an den Klemmen V3, V4 abgegriffen. Fig. 12a) zeigt eine Konfiguration unter ausschließlicher Verwendung von Barberpolstreifen. Fig. 12b) eine Konfiguration unter ausschließlicher Verwendung von Streifenleitern ohne Barberpole. Fig. 12c) zeigt eine gemischte Konfiguration aus Streifenleitern mit und ohne Barberpolen. Jeder dieser Strukturen ist ein hier nicht dargestellter permanenter Stützmagnet hinterlegt mit Polarisation in Richtung der X-Achse. Die magnetische Feldstärke des Stützmagneten wird so gewählt, dass die zu Fig.7 a) und b) erläuterten sensorischen Eigenschaften nur unwesentlich beeinflusst werden. Der Betrieb dieser Brückenstrukturen erfolgt planparallel zur Encoderspur unter orthogonaler Ausrichtung zum gemeinsamen XYZ-Bezugssystem. In Fig. 12 können beispielsweise die Amplituden der beiden jeweiligen Halbbrücken des beobachtenden Pfades an den Klemmen V3 und V4 abgegriffen werden.

Ein weiterer Ausführungsvorschlag basiert auf einer modifizierten Anwendung von MR-Winkel- oder Wegsensoren. Die Ebene dieser Sensoren wird normalerweise ohne Anwendung eines Stützmagneten zum Zweck der Winkel-/Längenmessung senkrecht gegenüber der Oberfläche eines als magnetischen Encoder ausgebildeten Längenmaßstabs in die YZ-Ebene ausgerichtet (also gegenüber 18 aus Fig. 5 um 90° gedreht) und die Rotation des Feldvektors gemäß Fig. 8 ausgewertet. Es wird beispielhaft vorgeschlagen, ein derartiges Element mit einem in X-Richtung polarisierten Stützmagneten in paralleler Ausrichtung zur Encoderspur (also wie 18 aus Fig. 5) zu betreiben und die Sin-Brücke für S1 und die Cos-Brücke für S2 zu nutzen, wobei die Streifenausrichtungen den beschriebenen Koordinatenausrichtungen genügen müssen.

## Patentansprüche

1. Verfahren zur Erhöhung der Eigensicherheit einer Anordnung zur Erfassung von linearen und/oder rotatorischen Bewegungen eines Körpers, insbesondere eines Rades, wobei die Anordnung aus einem magnetischen Encoder (5,25) und einem Sensor (26) besteht und der Sensor (26) mindestens zwei magnetoresistive Sensorelemente (S1,S2) aufweist, welche mit dem magnetischen Encoder (5,25) magnetisch gekoppelt sind, **dadurch gekennzeichnet, dass** die Signale mindestens zweier, voneinander getrennter Signalpfade (S1, f1; S2, f2), von denen jeder mindestens eines der Sensorelemente (S1, S2) beinhaltet, miteinander bezüglich ihrer Frequenz verglichen werden, wobei mindestens ein primär messender Signalpfad (S1, f1), welcher so aufgebaut ist, dass der/die zeitliche/n Verlauf/Verläufe seines mindestens einen Ausgangssignals im Normalbetrieb Muster aufweist/aufweisen, wobei das zeitliche Auftreten dieser Muster im Wesentlichen der einfachen Relativgeschwindigkeit zwischen dem Sensor und den durch diesen erfassten Polpaaren des Encodecs entspricht und/oder dass seine ein oder mehreren Ausgangssignale im Normalbetrieb die einfache Raddrehzahl wiedergeben, und mindestens ein beobachtender Signalpfad (S2, f2), welcher so aufgebaut ist, dass der/die zeitliche/n Verlauf/Verläufe seines mindestens einen Ausgangssignals Muster aufweist/aufweisen, wobei das zeitliche Auftreten dieser Muster im Wesentlichen der doppelten Relativgeschwindigkeit zwischen dem Sensor und den durch diesen erfassten Polpaaren des Encoders entspricht und/oder dass seine ein oder mehreren Ausgangssignale die doppelte Raddrehzahl wiedergeben, vorhanden ist, und dass das Vergleichsergebnis an eine elektronische Kontrolleinheit (ECU) übertragen wird.

2. Anordnung zur eigensicheren Erfassung von linearen und/oder rotatorischen Bewegungen eines Körpers, insbesondere eines Rades, bestehend aus einem magnetischen Encoder (5,25) und einem Sensor (26), wobei der magnetische Encoder (5,25) sich mit dem Körper, insbesondere dem Rad, bewegt und/oder rotiert und über einen magnetischen Luftspalt mit mindestens zwei magnetoresistiven Sensorelementen (S1,S2) des Sensors (26) magnetisch gekoppelt ist, insbesondere zur Ausführung des Verfahrens nach Anspruch 1, wobei der Sensor (26) mindestens zwei voneinander getrennte Signalpfade (S1, f1; S2, f2) aufweist, die jeweils mindestens eines der Sensorelemente (S1, S2) und jeweils eine Signalaufbereitungsstufe (28, 29) umfassen, **dadurch gekennzeichnet, dass** mindestens ein primär messender Signalpfad vorhanden und (S1,f1) so aufgebaut ist, dass sein mindestens eines Ausgangssignal im Normalbetrieb die einfache Frequenz der Encoderbewegung wiedergibt und/oder dass der/die zeitliche/n Verlauf/Verläufe seines mindestens einen Ausgangssignals im Normalbetrieb Muster aufweist/ aufweisen, wobei das zeitliche Auftreten dieser Muster im WesenLlichen der einfachen Relativgeschwindigkeit zwischen dem Sensor (26) und den durch diesen erfassten Polpaaren des Encoders (5,25) entspricht und wobei mindestens ein beobachtender Signalpfad (S2,f2) vorhanden und so aufgebaut ist, dass sein mindestens eines Ausgangssignal die doppelte Frequenz der Encoderbewegung wiedergibt und/oder dass der/die zeitliche/n Verlauf/ Verläufe seines mindestens einen Ausgangssignals im Normalbetrieb Muster aufweist/aufweisen, wobei das zeitliche Auftreten dieser Muster im Wesentlichen der doppelten Relativgeschwindigkeit zwischen dem Sensor (26) und den durch diesen erfassten Polpaaren des Encoders (5,25) entspricht, wobei der Sensor einen Vergleicher (30) aufweist, mit dem das/die Ausgangssignal/e des mindestens einen primär messenden Signalpfades (S1,f1) und des mindestens einen beobachtenden Signalpfades (S2,f2) bezüglich ihrer Frequenz miteinander verglichen werden.

3. Anordnung gemäß Anspruch 2, **dadurch gekennzeichnet, dass** der Sensor (26) mit einer elektronischen Kontrolleinheit (ECU) (27) verbunden ist, an welche das Vergleichsergebnis des Vergleichers (30) übertragen wird.

4. Anordnung nach Anspruch 2 oder 3, **dadurch gekennzeichnet, dass** der Sensor (26) so ausgebildet ist, dass das mindestens eine Ausgangssignal des mindestens einen Sensorelements, insbesondere des/der Sensorelements/Sensorelemente (S1) des mindestens einen primär messenden Signalpfades (S1, f1), neben der Information über die Frequenz der Encoderbewegunqen zusätzliche Informationen (ZI1), insbesondere über Drehrichtung und/oder Luftspaltmaß, bereitstellt.

5. Anordnung nach mindestens einem der Ansprüche 2 bis 4, **dadurch gekennzeichnet, dass** der Sensor (26) so ausgelegt ist, dass die Ausgangssignale des mindestens einen primär messenden Signalpfades (S1, f1) und des mindestens einen beobachtenden Signalpfades (S2, f2) ständig oder zu definierten Zeitpunkten miteinander in dem Vergleicher (30) verglichen werden, wobei der Vergleicher (30) insbesondere so ausgelegt ist, dass, wenn die von den Ausgangssignalen des/der primär messenden Signalpfade/s und des/der beobachtenden Signalpfade/s wiedergegebenen Frequenzen im Wesentlichen übereinstimmen, eine fehlerhafte Funktion des/der primär messenden Signalpfade/s (S1, f1) erkannt wird.

6. Anordnung nach mindestens einem der Ansprüche 2 bis 5, **dadurch gekennzeichnet, dass** der Sensor so ausgebildet ist, dass über ein geeignetes Signal eine Information über den Funktionszustand des/der primär messenden Signalpfade/s (S1, f1), insbesondere gemeinsam mit dem/den Ausgangssignal(en) des/der primär messenden Signalpfade/s, an die elektronische Kontrolleinheit (ECU) (27) übertragen wird,

7. Anordnung nach mindestens einem der Ansprüche 2 bis 6, **dadurch gekennzeichet**, dass der Vergleicher so ausgebildet ist, dass dieser, insbesondere zusätzliche, andere Signalparameter wie beispielsweise die Amplitude, des mindestens einen Ausgangssignals des mindestens einen primär messenden Signalpfades und des mindestens einen beobachtenden Signalpfades miteinander vergleicht und auswertet.

8. Anordnung nach mindestens einem der Ansprüche 2 bis 7, **dadurch gekennzeichnet, dass** die Elemente zur Signalaufbereitung und -verarbeitung (28, 29, 30, 31, M, 11) als elektronische Schaltungen aufgebaut sind, insbesondere als Teil mindestens eines integrierten Schaltkreises.

9. Anordnung nach mindestens einem der Ansprüche 2 bis 8, **dadurch gekennzeichnet, dass** der magnetische Encoder (5,25) eine permanent magnetisierte Encoderspur aufweist, welche insbesondere aus alternierenden magnetischen Nord-Südpolen besteht, und dass die Sensorelemente (S1, S2) den einen magnetoresistiven Effekt, insbesondere den anisotropen magnetoresistiven Effekt, nutzen und insbesondere als Kombination von Streifenleitern aus Permalloy ausgebildet sind, insbesondere liegen dabei die Streifenleiter flächig in der Fläche des Sensorelements.

10. Anordnung nach mindestens einem der Ansprüche 2 bis 9, **dadurch gekennzeichnet, dass** die Ebenen der Sensorelemente (14, S1, S2) im wesentlichen parallel zur Ebene der Encoderspur (13) (XY-Ebene) angeordnet sind.

11. Anordnung nach mindestens einem der Ansprüche 2 bis 10, **dadurch gekennzeichnet, dass** das/die Sensorelement/e (S1) in dem mindestens einen primär messenden Signalpfad eine Halb- oder Vollbrückenkombination aus Streifenleitern ist/sind, wobei die Streifenleiter, insbesondere jeweils, entweder im Fall dass sie keine Barberpole besitzen, unter einem Winkel von im Wesentlichen +45° oder -45° zur Bewegungsrichtung des Encoders (Y-Achse), insbesondere auch in einer entsprechenden Ausrichtung bezüglich der Bewegungsrichtung des Encoders (Y-Achse) gespiegelt, ausgerichtet sind, oder im Fall dass sie jedoch mit Barberpolen versehen sind, im Wesentlichen senkrecht oder parallel zur Bewegungsrichtung des Encoders (Y-Achse), ausgerichtet sind.

12. Anordnung nach mindestens einem der Ansprüche 2 bis 11, **dadurch gekennzeichnet, dass** das/die Sensorelement/e (S2) in dem mindestens einen beobachtenden Signalpfad eine Halb- oder Vollbrückenkombination aus Streifenleitern ist/sind, wobei die Streifenleiter, insbesondere jeweils, entweder im Fall dass sie keine Barberpole besitzen, im Wesentlichen parallel oder senkrecht zur Bewegungsrichtung des Encoders (Y-Achse) ausgerichtet sind, oder wenn sie jedoch mit Barberpolen versehen sind, unter einem Winkel von im Wesentlichen +45° oder - 45° zur Bewegungsrichtung des Encoders (Y-Achse), insbesondere auch in einher entsprechenden Ausrichtung bezüglich der Bewegungsrichtung des Encoders (Y-Achse) gespiegelt, ausgerichtet sind.

13. Anordnung nach mindestens einem der Ansprüche 2 bis 12, **dadurch gekennzeichnet, dass** ein oder mehrere, insbesondere alle, Sensorelement/e (S1, S2) mit einem Permanentmagneten und/oder einer Spule zur Bildung eines Vorspannmagnetfeldes versehen sind.

14. Anordnung nach mindestens einem der Ansprüche 2 bis 13, **dadurch gekennzeichnet, dass** die Sensorelemente (S1, S2) der verschiedenen Signalpfade, insbesondere zusätzlich mit den Elementen zur Signalaufbereitung und - verarbeitung (28, 29, 30, 31, M, 11), auf einem gemeinsamen Chip integriert sind.

15. Verwendung des Verfahrens und/oder der Anordnung gemäß mindestens einem der vorhergehenden Ansprüche in Kraftfahrzeugen, insbesondere in mindestens einem Raddrehzahlsensorsystem.

## Claims

1. Method for increasing the intrinsic safety of an arrangement for detecting linear and/or rotational movements of a body, in particular of a wheel, the arrangement comprising a magnetic encoder (5, 25) and a sensor (26) and the sensor (26) having at least two magnetoresistive sensor elements (S1, S2) which are magnetically coupled to the magnetic encoder (5, 25), **characterized in that** the signals of at least two mutually separate signal paths (S1, f1; S2, f2), each of which comprises at least one of the sensor elements (S1, S2), are compared with one another with regard to their frequency, at least one primarily measuring signal path (S1, f1) being present which is constructed in such a way that the temporal profile/profiles of its at least one output signal during normal operation has/have patterns, the temporal occurrence of said patterns essentially corresponding to the basic relative speed between the sensor and the pole pairs of the encoder which are detected by said sensor, and/or that its one or more output signals during normal operation represent the basic wheel rotational speed, and at least one observing signal path (S2, f2) being present which is constructed in such a way that the temporal profile/profiles of its at least one output signal has/have patterns, the temporal occurrence of said patterns essentially corresponding to the doubled relative speed between the sensor and the pole pairs of the encoder which are detected by said sensor, and/or that its one or more output signals represent the doubled wheel rotational speed, and **in that** the comparison result is transmitted to an electronic control unit (ECU).

2. Arrangement for the intrinsically safe detection of linear and/or rotational movements of a body, in particular of a wheel, comprising a magnetic encoder (5, 25) and a sensor (26), the magnetic encoder (5, 25) moving and/or rotating with the body, in particular the wheel, and being magnetically coupled to at least two magnetoresistive sensor elements (S1, S2) of the sensor (26) via a magnetic air gap, in particular for performing the method according to Claim 1, the sensor (26) having at least two mutually separate signal paths (S1, f1; S2, f2) which comprise in each case at least one of the sensor elements (S1, S2) and in each case a signal conditioning stage (28, 29), **characterized in that** at least one primarily measuring signal path (S1, f1) is present and constructed in such a way that its at least one output signal during normal operation represents the basic frequency of the encoder movement and/or that the temporal profile/profiles of its at least one output signal during normal operation has/have patterns, the temporal occurrence of said patterns essentially corresponding to the basic relative speed between the sensor (26) and the pole pairs of the encoder (5, 25) which are detected by said sensor, and at least one observing signal path (S2, f2) being present and constructed in such a way that its at least one output signal represents the doubled frequency of the encoder movement and/or that the temporal profile/profiles of its at least one output signal during normal operation has/have patterns, the temporal occurrence of said patterns essentially corresponding to the doubled relative speed between the sensor (26) and the pole pairs of the encoder (5, 25) which are detected by said sensor, the sensor having a comparator (30), with which the output signal/signals of the at least one primarily measuring signal path (S1 f1), and of the at least one observing signal path (S2, f2) are compared with one another with regard to their frequency.

3. Arrangement according to Claim 2, **characterized in that** the sensor (26) is connected to an electronic control unit (ECU) (27), to which the comparison result of the comparator (30) is transmitted.

4. Arrangement according to Claim 2 or 3, **characterized in that** the sensor (26) is formed such that the at least one output signal of the at least one sensor element, in particular of the sensor element/sensor elements (S1) of the at least one primarily measuring signal path (S1, f1), provides, alongside the information about the frequency of the encoder movements, additional information items (ZI1), in particular about direction of rotation and/or air gap size.

5. Arrangement according to at least one of Claims 2 to 4, **characterized in that** the sensor (26) is designed such that the output signals of the at least one primarily measuring signal path (S1, f1) and of the at least one observing signal path (S2, f2) are compared with one another in the comparator (30) continuously or at defined points in time, the comparator (30) being designed in particular in such a way that, if the frequencies represented by the output signals of the primarily measuring signal path/paths and of the observing signal path/paths essentially match, an erroneous function of the primarily measuring signal path/paths (S1, f1) is identified.

6. Arrangement according to at least one of Claims 2 to 5, **characterized in that** the sensor is formed such that, by means of a suitable signal, an item of information about the functional state of the primarily measuring signal path/paths (S1, f1), in particular together with the output signal(s) of the primarily measuring signal path/paths, is transmitted to the electronic control unit (ECU) (27).

7. Arrangement according to at least one of Claims 2 to 6, **characterized in that** the comparator is formed such that it compares with one another and evaluates, in particular additional, other signal parameters such as the amplitude, for example, of the at least one output signal of the at least one primarily measuring signal path and of the at least one observing signal path.

8. Arrangement according to at least one of Claims 2 to 7, **characterized in that** the elements for signal conditioning and processing (28, 29, 30, 31, M, 11) are constructed as electronic circuits, in particular as part of at least one integrated circuit.

9. Arrangement according to at least one of Claims 2 to 8, **characterized in that** the magnetic encoder (5, 25) has a permanently magnetized encoder track comprising, in particular, alternating magnetic north-south poles, and **in that** the sensor elements (S1, S2) utilize one magnetoresistive effect, in particular the anisotropic magnetoresistive effect, and are formed in particular as a combination of striplines composed of permalloy; in particular, the striplines in this case lie areally in the area of the sensor element.

10. Arrangement according to at least one of Claims 2 to 9, **characterized in that** the planes of the sensor elements (14, S1, S2) are arranged essentially parallel to the plane of the encoder track (13) (XY plane).

11. Arrangement according to at least one of Claims 2 to 10, **characterized in that** the sensor element/elements (S1) in the at least one primarily measuring signal path is/are a half- or full-bridge combination of striplines, the striplines, in particular in each case, either if they have no Barber-poles, being oriented at an angle of essentially +45° or -45° with respect to the direction of movement of the encoder (Y axis), in particular also in a manner mirrored in a corresponding orientation with regard to the direction of movement of the encoder (Y axis), or if they are provided with Barber-poles, however, being oriented essentially perpendicular or parallel to the direction of movement of the encoder (Y axis).

12. Arrangement according to at least one of Claims 2 to 11, **characterized in that** the sensor element/elements (S2) in the at least one observing signal path is/are a half- or full-bridge combination of striplines, the striplines, in particular in each case, either if they have no Barber-poles, being oriented essentially parallel or perpendicular to the direction of movement of the encoder (Y axis), or if they are provided with Barber-poles, however, being oriented at an angle of essentially +45° or -45° with respect to the direction of movement of the encoder (Y axis), in particular also in a manner mirrored in a corresponding orientation with regard to the direction of movement of the encoder (Y axis).

13. Arrangement according to at least one of Claims 2 to 12, **characterized in that** one or a plurality, in particular all, of the sensor element(s) (S1, S2) is/are provided with a permanent magnet and/or a coil for forming a biasing magnetic field.

14. Arrangement according to at least one of Claims 2 to 13, **characterized in that** the sensor elements (S1, S2) of the different signal paths, in particular additionally with the elements for signal conditioning and processing (28, 29, 30, 31, M, 11) are integrated on a common chip.

15. Use of the method and/or of the arrangement according to at least one of the preceding claims in motor vehicles, in particular in at least one wheel rotational speed sensor system.

## Revendications

1. Procédé pour augmenter la sécurité intrinsèque d'un dispositif pour la saisie de mouvements linéaires et/ou de rotation d'un corps, notamment d'une roue, le dispositif étant constitué d'un encodeur magnétique (5, 25) et d'un capteur (26) et le capteur (26) comportant au moins deux éléments capteurs magnétorésistifs (S1, S2) couplés magnétiquement à l'encodeur magnétique (5, 25), **caractérisé en ce**
**qu'**on compare entre elles les fréquences des signaux d'au moins deux chemins de signaux mutuellement séparés (S1, f1 ; S2, f2) contenant chacun au moins un des éléments capteurs (S1, S2), dans lequel on dispose
d'au moins un chemin de signaux de mesure primaire (S1, f1) construit de sorte que l'évolution dans le temps de son signal ou de ses signaux de sortie comporte en fonctionnement normal des motifs, l'apparition dans le temps de ces motifs correspondant pour l'essentiel à la simple vitesse relative entre le capteur et les paires de pôles de l'encodeur saisies par celui-ci et/ou que ses signaux de sortie, uniques ou multiples, représentent en fonctionnement normal la simple vitesse de rotation,
et d'au moins un chemin de signaux de mesure d'observation (S2, f2) construit de sorte que l'évolution dans le temps de son signal ou de ses signaux de sortie comporte des motifs, l'apparition dans le temps de ces motifs correspondant pour l'essentiel au double de la vitesse relative entre le capteur et les paires de pôles de l'encodeur saisies par celui-ci et/ou que ses signaux de sortie, uniques ou multiples, représentent le double de la vitesse de rotation,
et **que** le résultat de la comparaison est transmis à une unité de contrôle électronique (ECU).

2. Dispositif pour la saisie avec une sécurité intrinsèque de mouvements linéaires et/ou de rotation d'un corps, notamment d'une roue, constitué d'un encodeur magnétique (5, 25) et d'un capteur (26), l'encodeur magnétique (5, 25) étant en mouvement et/ou en rotation avec le corps, notamment la roue, et étant couplé magnétiquement par l'intermédiaire d'une lame d'air magnétique à au moins deux éléments capteurs magnétorésistifs (S1, S2) du capteur (26), notamment pour l'exécution du procédé selon la revendication 1, le capteur (26) comportant au moins deux chemins de signaux mutuellement séparés (S1, f1 ; S2, f2) contenant respectivement au moins un des éléments capteurs (S1, S2) et respectivement un étage de traitement du signal (28, 29),
**caractérisé en ce**
**qu'**on dispose d'au moins un chemin de signaux de mesure primaire (S1, f1) construit de sorte que son signal ou ses signaux de sortie produisent en fonctionnement normal la fréquence simple du mouvement de l'encodeur et/ou que l'évolution dans le temps de son signal ou de ses signaux de sortie comporte en fonctionnement normal des motifs, l'apparition dans le temps de ces motifs correspondant pour l'essentiel à la simple vitesse relative entre le capteur (26) et les paires de pôles de l'encodeur (5, 25) saisies par celui-ci et
**qu'**on dispose d'au moins un chemin de signaux d'observation (S2, f2) construit de sorte que son signal ou ses signaux de sortie produisent la fréquence double du mouvement de l'encodeur et/ou que l'évolution dans le temps de son signal ou de ses signaux de sortie comporte des motifs, l'apparition dans le temps de ces motifs correspondant pour l'essentiel au double de la vitesse relative entre le capteur (26) et les paires de pôles de l'encodeur (5, 25) saisies par celui-ci, le capteur comportant un comparateur (30) permettant de comparer entre elles les fréquences du signal ou des signaux de sortie d'au moins un chemin de signaux de mesure primaire (S1, f1) et d'au moins un chemin de signaux de mesure d'observation (S2, f2).

3. Dispositif selon la revendication 2, **caractérisé en ce que** le capteur (26) est relié à une unité de contrôle électronique (ECU) (27) à laquelle est transmis le résultat de la comparaison du comparateur (30).

4. Dispositif selon la revendication 2 ou 3, **caractérisé en ce que** le capteur (26) est réalisé de sorte que le signal ou les signaux de sortie d'au moins un élément capteur, notamment d'au moins un élément capteur (S1) d'au moins un chemin de signaux de mesure primaire (S1, f1), fournisse en plus de l'information de fréquence du mouvement de l'encodeur, des informations additionnelles (ZI1) concernant notamment le sens de rotation et/ou la mesure de la lame d'air.

5. Dispositif selon une au moins des revendications 2 à 4, **caractérisé en ce que** le capteur (26) est réalisé de sorte que les signaux de sortie d'au moins un chemin de signaux de mesure primaire (S1, f1) et d'au moins un chemin de signaux d'observation (S2, f2) soient comparés entre eux en permanence ou à des moments définis dans le comparateur (30), le comparateur (30) étant notamment réalisé de sorte que lorsque les fréquences produites par les signaux de sortie du/des chemin(s) de signaux de mesure primaire et du/des chemin(s) de signaux d'observation coïncident, on identifie une fonction défectueuse du/des chemin(s) de signaux de mesure primaire (S1, f1).

6. Dispositif selon une au moins des revendications 2 à 5, **caractérisé en ce que** le capteur est réalisé de manière à transmettre à l'unité de contrôle électronique (ECU) (27) par l'intermédiaire d'un signal approprié, une information concernant l'état de fonctionnement du chemin ou des chemins de signaux de mesure primaire (S1, f1) notamment conjointement au signal ou aux signaux de sortie du/des chemin(s) de signaux de mesure primaire.

7. Dispositif selon une au moins des revendications 2 à 6, **caractérisé en ce que** le comparateur est réalisé de sorte que celui-ci compare et interprète d'autres paramètres de signaux notamment additionnels, comme par exemple l'amplitude du signal ou des signaux de sortie d'au moins un chemin de signaux de mesure primaire et d'au moins un chemin de signaux d'observation.

8. Dispositif selon une au moins des revendications 2 à 7, **caractérisé en ce que** les éléments de traitement et d'exploitation des signaux (28, 29, 30, 31, M, 11) sont construits sous la forme de circuits électroniques, notamment comme élément d'au moins un circuit intégré.

9. Dispositif selon une au moins des revendications 2 à 8, **caractérisé en ce que** l'encodeur magnétique (5, 25) comporte une piste de l'encodeur magnétisée en aimant permanent, constituée notamment de pôles magnétiques Nord-Sud alternés, et **en ce que** les éléments capteurs (S1, S2) utilisent un des effets magnétorésistifs notamment l'effet magnétorésistif anisotropique et qu'ils sont notamment réalisés sous la forme d'une combinaison de bandes conductrices en Permalloy, les bandes conductrices étant notamment déposées en surface sur l'étendue de l'élément capteur.

10. Dispositif selon une au moins des revendications 2 à 9, **caractérisé en ce que** les plans des éléments capteurs (14, S1, S2) sont essentiellement disposés parallèlement au plan de la piste de l'encodeur (13) (plan XY).

11. Dispositif selon une au moins des revendications 2 à 10, **caractérisé en ce que** l'élément capteur ou les éléments capteurs (S1) dans au moins un chemin de signaux de mesure primaire est/sont constitué(s) d'une combinaison de bandes conductrices en demi-pont ou en pont, et notamment
dans le cas où elles ne possèdent pas de pôles hélicoïdaux, les bandes conductrices sont orientées pour l'essentiel sous un angle de +45° ou -45° par rapport à la direction du mouvement de l'encodeur (axe Y), notamment également dans une orientation miroir correspondante en ce qui concerne la direction du mouvement de l'encodeur (axe Y), et
dans le cas où elles possèdent néanmoins des pôles hélicoïdaux, les bandes conductrices sont orientées pour l'essentiel perpendiculairement ou parallèlement à la direction du mouvement de l'encodeur (axe Y).

12. Dispositif selon une au moins des revendications 2 à 11, **caractérisé en ce que** l'élément capteur ou les éléments capteurs (S2) dans au moins un chemin de signaux d'observation est/sont constitué(s) d'une combinaison de bandes conductrices en demi-pont ou en pont, et
dans le cas où elles ne possèdent pas de pôles hélicoïdaux, les bandes conductrices sont orientées pour l'essentiel parallèlement ou perpendiculairement à la direction du mouvement de l'encodeur (axe Y), et
dans le cas où elles possèdent néanmoins des pôles hélicoïdaux, les bandes conductrices sont orientées pour l'essentiel sous un angle de +45° ou -45° par rapport à la direction du mouvement de l'encodeur (axe Y), notamment également dans une orientation miroir correspondante en ce qui concerne la direction du mouvement de l'encodeur (axe Y).

13. Dispositif selon une au moins des revendications 2 à 12, **caractérisé en ce qu'**un élément capteur ou plusieurs, notamment tous les éléments capteurs (S1, S2) sont pourvus d'un aimant permanent et/ou d'une bobine pour créer un champ magnétique de précontrainte.

14. Dispositif selon une au moins des revendications 2 à 13, **caractérisé en ce que** les éléments capteurs (S1, S2) des différents chemins de signaux sont intégrés avec notamment les éléments additionnels de traitement et d'exploitation des signaux (28, 29, 30, 31, M, 11) au sein d'une puce commune de circuit intégré.

15. Utilisation du procédé et/ou du dispositif selon une au moins des revendications précédentes dans des véhicules automobiles, notamment dans au moins un système capteur de vitesse de rotation de roue.
